# EUROPÄISCHE PATENTSCHRIFT

(11) **EP 1 926 019 B1**
(45) Veröffentlichungstag und Bekanntmachung des Hinweises auf die Patenterteilung: **16.05.2012**
(21) Anmeldenummer: 06124787.0
(22) Anmeldetag: 24.11.2006
(51) Int. Cl.: G06F 9/44

(54) **Datenaustauschverfahren und Steuerverfahren zwischen Softwarebausteinen sowie wiederverwendbare Softwarebausteine**
Data exchange method and control method between software components as well as reusable software components.
Procédé d'échange de données et procédé de commande entre des composants logiciels et des composants logiciels réutilisables.

(43) Veröffentlichungstag der Anmeldung: 28.05.2008
(73) Patentinhaber: Tangro Software Components GmbH, 69115 Heidelberg (DE)
(72) Erfinder: Schumann, Andreas, 69118 Heidelberg (DE)
(74) Vertreter: Schneider, Günther Martin

(56) Entgegenhaltungen:
- US-B1- 6 401 138
- HE JIFENG ET AL: "Component-based software engineering the need to link methods and their theories" THEORETICAL ASPECTS OF COMPUTING ICTAC 2005. SECOND INTERNATIONAL COLLOQUIUM. PROCEEDINGS (LECTURE NOTES IN COMPUTER SCIENCE VOL.3722) SPRINGER-VERLAG BERLIN, GERMANY, 2005, Seiten 70-95, XP019020480 ISBN: 3-540-29107-5
- WIKIPEDIA: "Komponente (Software)" INTERNET ARTICLE, [Online] 6. November 2006 (2006-11-06), Seiten 1-3, XP002430663 Gefunden im Internet: URL:http://de.wikipedia.org/w/index.php?ti tle=Komponente_%28Software%29&oldid=234696 79> [gefunden am 2007-04-18]
- AHO A V ET AL: "Data Structures and Algorithms , STORAGE COMPACTION" DATA STRUCTURES AND ALGORITHMS, READING, MA : ADDISON-WESLEY, US, 1983, Seiten 84-87, XP002306443 ISBN: 0-201-00023-7

## Beschreibung

Die Erfindung betrifft Datenaustauschverfahren zwischen Softwarebausteinen sowie wiederverwendbare Softwarebausteine, welche gemäß diesen Verfahren arbeiten.

### Technisches Gebiet

Software kann in zwei Klassen unterteilt werden, und zwar in Systemsoftware und Anwendungsoftware. Systemsoftware umfasst Basis-Programme, die mit dem Computer auf einer sehr technischen Ebene zusammenarbeiten. Diese umfassen Betriebssysteme, Compiler und Werkzeuge zur Verwaltung von Computerressourcen.

Mit Anwendungsoftware sind hier Softwareprogramme gemeint, die für den Gebrauch durch Endanwender bestimmt sind. Diese können das gesamte Spektrum von Anwendungen umfassen, von betriebswirtschaftlichen bis zu Steuerungen von Geräten im Haushalt, Maschinen und ganzen Fertigungsstraßen in der Industrie. Im Gegensatz kommuniziert Anwendungsoftware i.d.R. mittelbar oder unmittelbar mit dem Endanwender und umfasst Datenbankprogramme, Textverarbeitung und Spreadsheets. Basis der Anwendungsoftware ist die Systemsoftware.

### Stand der Technik

Um Anwendungssoftware flexibel verwendbar zu machen und Kosten zu sparen, wendet sich der Blick der Softwarehersteller immer wieder neuen Ansätzen zu. Dabei geht es um die standardisierte Kapselung von Funktionen einer SW-Anwendung, die für andere Anwendungen auffindbar und nutzbar sind. Die Ansätze folgen dem Modell verteilter Software, bei dem alle Funktionen als Services definiert sind. In einer solchen serviceorientierten Architektur können diese Services entsprechend der Geschäftslogik in bestimmten Abfolgen programmseitig aufgerufen werden, um Geschäftsprozesse zu unterstützen. Dabei wird von Schnittstellen ausgegangen und dem damit verbundenen Aufwand. Die technische Implementierung steht im Vordergrund. Soweit Prozessdiagramme existieren, müssen sie technisch umgesetzt, also programmiert werden. Des Weiteren sind bereits Verfahren bekannt, die auf Basis graphischer Prozessmodelle Programmcode generieren.

Solche Verfahren werden bei Standardsoftware teilweise eingesetzt oder sollen in Zukunft verstärkt zum Einsatz kommen. Standardsoftware bietet den Unternehmen sowohl vorgefertigte Software als auch einen vorgedachten, an der Praxis orientierten, verlässlichen, betriebswirtschaftlichen Rahmen. Der Softwarehersteller übernimmt die Aufgabe, die Aktualität der Software zu gewährleisten, neue Anforderungen aus betriebswirtschaftlicher und gesetzlicher Perspektive rechtzeitig zu erkennen und umzusetzen.

Die Einführung, Anpassung und Pflege von Standardsoftware gestaltet sich allerdings erfahrungsgemäß schwierig. Hersteller von Standardsoftware haben schon aus Kostengründen keine andere Wahl, als möglichst viele Prozesse unterschiedlicher Branchen länderübergreifend, gesetzeskonform und so vollständig wie möglich abzubilden - immer mit dem Blick auf zukünftige Anforderungen. Kundenanforderungen müssen in den Standard übernommen werden. Auf diese Weise wächst das Angebot der Softwarelösung kontinuierlich, der Kundenkreis erweitert sich, die enormen Investitionen zahlen sich aus.

Allerdings entsteht auch Funktionalität, die für ein Unternehmen eine wesentliche Rolle spielen mag, für andere Unternehmen aber lediglich Ballast darstellt. Schätzungen gehen davon aus, dass lediglich 20 bis 30 % der verfügbaren Funktionalität der Standardsoftware tatsächlich beim Kunden genutzt wird.

Für den einzelnen Kunden entsteht ein Überangebot an nicht benötigten Funktionen, das in Kombination mit der dem Unternehmen eigenen betriebswirtschaftlichen Komplexität dazu führt, dass der Kunde leicht die Übersicht verlieren kann. Als Folge werden schon geringfügige Änderungen in der Software zum Risiko für den laufenden Betrieb und verursachen oft hohe Kosten.

Je detaillierter auf die Bedürfnisse der Gesamtheit der Kunden eingegangen wird, umso komplexer wird die Kundenanpassung (Customizing bzw. Parametrisierung). Der Kunde aus der Textilbranche wird mit den Möglichkeiten des Customizing für die Fertigungsindustrie und vielen anderen Branchen konfrontiert. Will der Kunde etwas ändern, so ereilt ihn stets das gleiche Schicksal - er wird mit einer Komplexität konfrontiert, die er nicht benötigt. Die Komplexität des Customizing steigt exponentiell mit der Anzahl der Möglichkeiten, das System flexibel einzustellen.

Erfahrungsgemäß entsprechen Funktionen und Prozesse der Softwareanbieter selten exakt den Vorstellungen der Kunden, oftmals decken sie diese den entscheidenden Passagen z. B. was den Prozess der Auftragsbearbeitung betrifft, nicht vollständig oder unzulänglich ab. Um ein Thema wie die Auftragsbearbeitung an die Bedürfnisse des eigenen Unternehmen anzupassen, will die gesamte Logik der Anwendungsoftware, die den Prozess der Auftragsbearbeitung steuert, zunächst einmal verstanden sein. Das gilt sowohl für Customizing als auch für Anpassungen, die programmiert werden müssen. Da die Auftragsbearbeitung von Standardsoftwareherstellern ein Vielfaches von dem leistet, was der einzelne Kunde tatsächlich benötigt, verliert die Software an Transparenz und ist entsprechend schwer zu verstehen. Änderungen sind mehr oder weniger riskant und mit schwer kalkulierbaren Folgen verbunden. Die Dokumentation enthält, soweit sie aktuell ist, nicht benötigte Informationen auf Kosten der Verständlichkeit. Enorme Folgekosten nach Einführung der Standardsoftware, die fast immer ein Vielfaches des Einstandspreises ausmachen, sind die Folgen einer kaum noch beherrschbaren Komplexität.

Aus Sicht des einzelnen Kunden wäre es ideal, die Auslieferung der Anwendungssoftware auf den jeweils tatsächlich benötigten Umfang zu beschränken. Die Komplexität der Anwendungssoftware würde dadurch drastisch sinken. Customizing, Anpassungen und Erweiterungen wären wesentlich einfacher, schneller realisiert und preiswerter durchzuführen.

Allerdings müssten die Softwarehersteller dann eine Vielzahl von Anwendungen anbieten - anstelle einer einzigen komplexen Anwendung. Es würden beispielsweise zahlreiche Varianten der Vertriebsabwicklung eines einzigen Softwareherstellers entstehen. Um die Herstellungskosten im Rahmen zu halten, müsste daher u.a. der Grad der Wiederverwendung von Programmteilen signifikant gesteigert werden. Der Entwicklungsaufwand für die Anwendung würde dann entsprechend sinken. Der Schnittstellenaufwand bleibt jedoch bestehen und mindert damit den Wert der Wiederverwendung.

Aus der US-Patentschrift 6,401,138 ist ein Verfahren zum Austausch von Daten zwischen Softwareanwendungen bekannt, wobei jede der Anwendungen die Daten, die von einer der anderen Anwendungen bereitzustellen sind, über eine vorbestimmte Schnittstelle von einem zentralen Modul bezieht und jede Anwendung die Daten, die von ihr für andere Anwendungen bereitzustellen sind, über die vorbestimmte Schnittstelle an das zentrale Modul abgibt.

### Kurzbeschreibung der Erfindung

Aufgabe der Erfindung ist es daher, Verfahren zum Austausch von Daten zwischen Softwarebausteinen anzugeben, welche die Wiederverwendbarkeit der Softwarebausteine sicherstellen, sowie gemäß diesen Verfahren arbeitende Softwarebausteine bereitzustellen.

Diese Aufgabe wird durch die Verfahren und die Softwarebausteine gemäß den Ansprüchen gelöst.

In einem weiteren Aspekt der Erfindung erhalten die Attribute-Datenwerte-Zuordnungen eine eindeutige ID und werden zu hierarchisch organisierten Datenobjekten verknüpft, wobei jedes Datenobjekt an oberster Hierarchieebene eine ID aufweist, welche das Datenobjekt eindeutig identifizierbar macht.

Hierzu kann ein Softwarebaustein, der Daten von dem vorbestimmten Softwarebaustein anfordert, die eindeutige hierarchische Beziehung der angeforderten Daten von einem anderen Softwarebaustein erhalten.

Die eindeutige hierarchische Beziehung kann durch Anfordern der ID des den angeforderten Daten übergeordneten Datenobjekts erhalten werden.

Gemäß einem weiteren Aspekt der Erfindung erhält ein Softwarebaustein, der Daten an den vorbestimmten Softwarebaustein abgibt, die eindeutige hierarchische Beziehung der abzugebenden Daten von einem anderen Softwarebaustein.

Hierbei kann die eindeutige hierarchische Beziehung durch Anfordern der ID des den abgegebenen Daten übergeordneten Datenobjekts erhalten werden.

Gemäß einem weiteren Aspekt der Erfindung wird beim Anfordern oder Übergeben von Daten die eindeutige hierarchische Beziehung der angeforderten Daten an den vorbestimmten Softwarebaustein bekannt gegeben.

Gemäß einem weiteren Aspekt der Erfindung gibt jeder Daten verarbeitende Softwarebaustein nach seiner Ausführung ein Ereignis aus, welches bezeichnend für ein Ergebnis seiner Ausführung ist.

Hierbei kann das Ereignis von einem vorbestimmten Softwarebaustein während des Prozesses ausgewertet werden.

Des Weiteren kann mit der Abgabe von Daten an den vorbestimmten Softwarebaustein das Halten der Daten bis zur Speicherung der Daten in einer Datenbank veranlasst werden.

Gemäß einem weiteren Aspekt der Erfindung gibt jeder Daten verarbeitende Softwarebaustein höchstens zwei verschiedene Ereignisse aus.

Gemäß einem weiteren Aspekt der Erfindung erledigt jeder Daten verarbeitende Softwarebaustein höchstens eine Aktivität, wobei die Gesamtheit der Aktivitäten den Prozess repräsentiert.

Die Attribut-Datenwerte-Paare können zusammen mit der hierarchischen Beziehung in einer Datenbank gespeichert werden.

Gemäß einer weiteren Ausführungsform der Erfindung bereitgestellt wird ein Verfahren zur Steuerung einer Anzahl von Softwarebausteinen mit den Merkmalen von Anspruch 14.

Hierbei kann ein Ergebnis des Abarbeitens einer Aktivität bezeichnend für den Erfolg des Abarbeitens der Aktivität sein.

Hierbei kann das ausgelöste Ereignis ein Ergebnis des prozessierten Softwarewarebausteins zur Verfügung stellen.

Das Ergebnis des Softwarebausteins kann einem vorbestimmten Softwarebaustein gemäß dem Verfahren nach der ersten Ausführungsform der Erfindung bereitgestellt wird.

Gemäß einer weiteren Ausführungsform der Erfindung bereitgestellt wird ein Computerprogramm, aufweisend eine Anzahl von Softwarebausteinen, die zusammenwirken, um einen Prozess abzuarbeiten, wobei der Prozess in eine Anzahl von Aktivitäten zerlegbar ist, wobei die Softwarebausteine Daten austauschen gemäß einem Verfahren nach einer der vorherigen Ausführungsformen.

Hierbei kann zumindest einer der Softwarebausteine ein Prozessbaustein sein.

Ein Prozessbaustein kann zumindest einen weiteren Softwarebaustein und/oder Prozessbaustein umfassen.

Die Erfindung umfasst auch einen Softwarebaustein mit den Merkmalen von Anspruch 15.

Erfindungsgemäß wird die Wiederverwendbarkeit der Softwarebausteine durch die einheitliche Benennung semantisch gleicher Datenwerte erreicht dadurch, dass hierarchische Informationen bezüglich der Daten nicht innerhalb jedes einzelnen Softwarebausteins vorgehalten werden. Vielmehr werden die hierarchischen Informationen von einem anderen Softwarebaustein bereitgestellt. Daneben spielt die Art des Datenaustauschs auf Basis des Data Exchange Service ("DES") als zentrale Sammelstelle eine wesentliche Rolle.

Mit der Erfindung wird die Möglichkeit geschaffen, vorgefertigte Softwarebausteine zu einer ablauffähigen Anwendung zusammenzufügen. Dazu werden die benötigten Softwarebausteine in einem Prozessmodell graphisch angeordnet. Mit der graphischen Gestaltung der Prozesse, die eine Anwendung bilden, z.B. die Auftragsbearbeitung eines Dienstleisters, entsteht die zur Auftragserfassung benötigte Anwendungsoftware. Zur Laufzeit der Anwendung wird das Ergebnis des Prozessmodells von einem dafür vorgesehenen Programm ausgewertet, und die zusammengefügten Softwarebausteine werden prozessiert.

Unter den in den Ansprüchen formulierten Voraussetzungen ist es möglich, sofort ablauffähige Anwendungen ausschließlich durch die graphische Verknüpfung der Ereignisse von wiederverwendbaren Softwarebausteinen mit einem anderen wiederverwendbaren Softwarebaustein zu erstellen.

Weiter vorteilhafterweise ermöglicht die Erfindung die graphische Darstellung betriebswirtschaftlicher Anforderungen auf Prozessebene, um diese in einem Top-Down-Ansatz bis auf Detailebene graphisch aufzulösen. So werden alle betriebswirtschaftlichen Prozesse auf unterschiedlichen Ebenen bis hin ins kleinste Detail transparent. Zusätzliche Anforderungen können zeitnah und kostengünstig umgesetzt werden. Medienbrüche zwischen Modellierung, Entwicklungsumgebung, Workflow und Dokumentation entfallen. Die graphische Prozessmodellierung montiert Softwarebausteine auf einfache Weise zu Anwendungsoftware. Die Bezeichnung der im Prozessmodell symbolisierten Softwarebausteine orientiert sich an der betriebswirtschaftlichen Terminologie. Es wird kein Programmcode generiert. Es werden ausschließlich jeweils vorhandene Softwarebausteine montiert. Die Erfindung ermöglicht es somit, Anwendungsoftware auf einfache Weise nach dem Baukasten-Prinzip aus wiederverwendbaren Softwarebausteinen zu erstellen.

Kurzbeschreibung der Zeichnung

Die Erfindung wird an Hand der Zeichnung näher erläutert, in welcher:
- Fig. 1A, B: zwei Programmabläufe einer Artikelsubstitution in einem betriebswirtschaftlichen Teilprozess zeigt;
- Fig. 2: einen Ausschnitt aus einer Auftragserfassungsmaske zeigt;
- Fig. 3A, B: ein Beispiel einer Datenstruktur gemäß der Erfindung zeigt;
- Fig. 4A, B: die Differenzierung zwischen Softwarebausteinen und Prozessbausteinen veranschaulicht;
- Fig. 5: ein Beispiel einer Datenstruktur zeigt;
- Fig. 6: ein weiteres Beispiel einer Datenstruktur zeigt;
- Fig. 7: eine graphische Darstellung eines betriebswirtschaftlichen Ablaufs zeigt;
- Fig. 8: eine graphische Darstellung eines Teils einer AuftragsmaskenDatenverwaltung zeigt;
- Fig. 9: einen Programmausschnitt aus einem Prozess zur Auftragserfassung zeigt;
- Fig. 10: einen Ausschnitt aus einem Konfigurationsmenü zeigt;
- Fig. 11: einen konfigurierten Prozess zeigt;
- Fig. 12A-D: ein zusammenfassendes Beispiel für das erfindungsgemäße Verfahren geben; und
- Fig. 13: den Programmablauf und die Informationsflüsse in einem Programmausschnitt zeigt, welches erfindungsgemäße Softwarebausteine enthält.

### Detaillierte Beschreibung

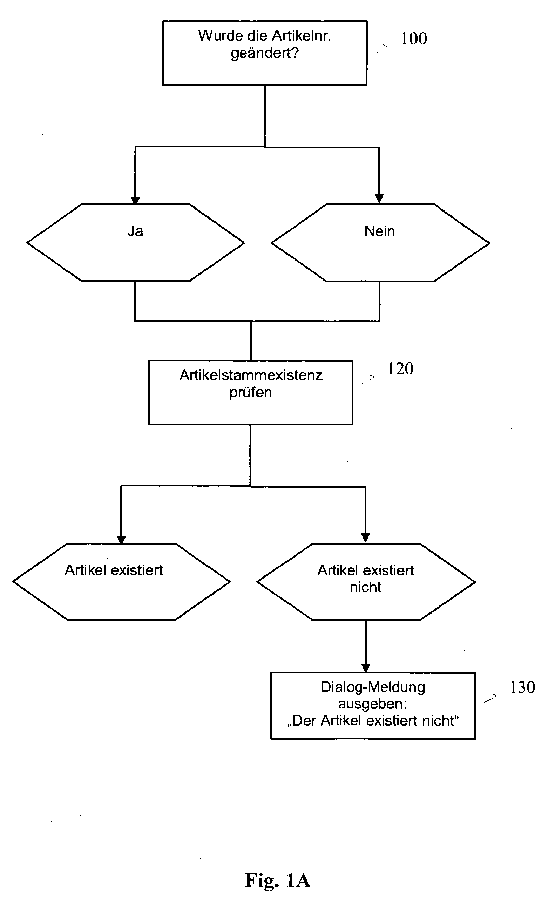

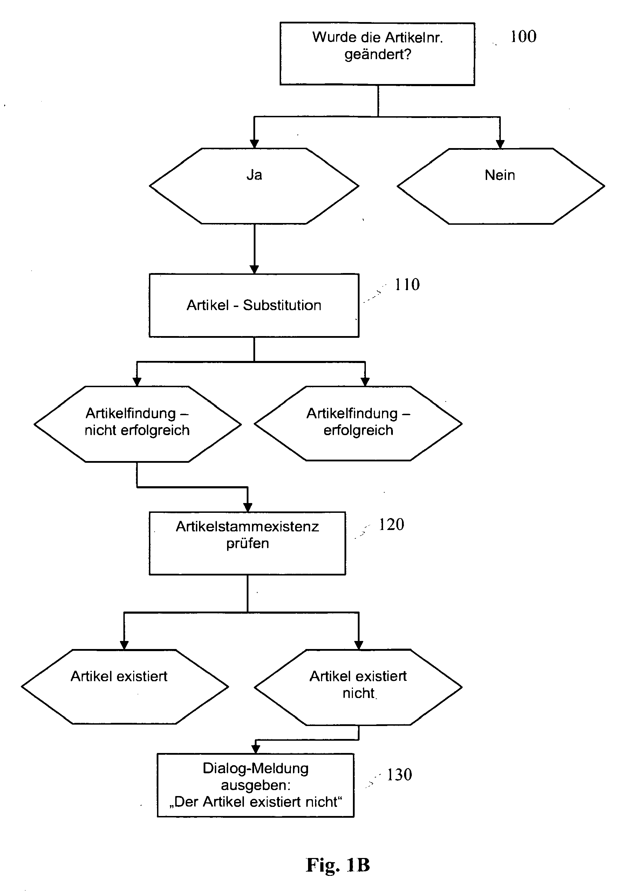

Die Forderung, Softwarebausteine beliebig kombinieren zu können, wird erfindungsgemäß dadurch realisiert, dass Softwarebausteine keine Daten an nachgelagerte Softwarebausteine über deren spezifische Schnittstelle weitergeben dürfen sondern die Daten an einen einzigen hierzu bestimmten Softwarebaustein abgeben bzw. von diesen beziehen. Denn zum Entwurfszeitpunkt des Softwarebausteins ist der potentielle Nachfolger nicht bekannt. Erst mit dem Designprozess des Anwendungsprozesses wird bekannt, welcher Softwarebaustein Nachfolger und Vorgänger des Softwarebausteins ist. In einem anderen Anwendungsprozess kann derselbe Softwarebaustein andere Nachfolger und Vorgänger haben. Fig. 1A, B illustrieren ein derartiges Beispiel. Beim Artikelprozess ohne Artikelsubstitution gemäß Fig. 1A wird der Softwarebaustein 120 "Artikelstammexistenz prüfen" nach dem Softwarebaustein 100 aufgerufen, der Auskunft gibt, ob die Artikelnummer geändert wurde.

Beim Artikelprozess mit Artikelsubstitution gemäß Fig. 1B wird hingegen der Softwarebaustein 120 "Artikelstammexistenz prüfen" nach dem Softwarebaustein 110 aufgerufen, der die Artikelsubstitution vornimmt. Ein und derselbe Softwarebaustein "Artikelstammexistenz prüfen" kann also je nach der spezifischen Anwendung unterschiedliche Vorgänger bzw. Nachfolger haben.

### Datenhaltung

Die Frage, woher Softwarebausteine die von ihnen benötigten Informationen erhalten und wohin sie neue Informationen abgeben, ist die Frage nach der Datenhaltung vom Verarbeitungsbeginn der Daten bis zu dem Zeitpunkt, an dem sie in einer Datenbank gespeichert werden.

Erfindungsgemäß ist die Übergabe von Daten eines Softwarebausteins an einen anderen nicht möglich. Die Anfrage nach Informationen erfolgt erfindungsgemäß stets an eine neutrale Instanz, die während des gesamten Prozesses, z.B. der Auftragsbearbeitung, präsent ist. Dies ist bei einer Ausführungsform der Erfindung ein Softwarebaustein, der eine Servicefunktion hat und während des gesamten Prozesses aktiv ist. Dieser Service - im Folgenden Data Exchange Service, kurz als DES bezeichnet - nimmt Daten entgegen, verwaltet die Daten über die gesamte Verarbeitung eines Vorgangs und gibt Daten auf Anfrage an einen Softwarebaustein aus.

Erfindungsgemäß unterliegt der Austausch der Daten einem standardisierten Verfahren, das allen beteiligten Instanzen im Programm bekannt ist und für alle beteiligten Instanzen verbindlich ist.

Im Folgenden wird das Verfahren mittels DES näher erläutert. Da jeder Baustein selbst am Besten "weiß", welche Daten er benötigt und zu welchem Ergebnis er kommt, d.h. welche zusätzlichen Informationen er beim Prozessieren für andere Softwarebausteine bereithält, besorgt sich jeder Softwarebaustein die benötigten Informationen vom DES und gibt mögliche Ergebnisse nach Erledigen seiner Aktivität an den DES ab. Damit können die im Programmablauf folgenden Softwarebausteine diese Informationen mit der gleichen Technik anfordern und ihrerseits neue Informationen zurückgeben. Dies entspricht dem Prinzip von Sammelstellen, bei denen Sachen abgegeben werden und von Interessierten abgeholt werden.

Mit der erfindungsgemäßen Bereitstellung des DES und den beschriebenen Mechanismen zur Kommunikation mit dem DES ist eine Voraussetzung geschaffen, dass Softwarebausteine beliebig kombiniert werden können.

Damit dies ohne Schnittstellenaufwand möglich ist, werden weitere Mechanismen bereitgestellt.

### Einheitliche Attribute

Damit jeder Softwarebaustein die Daten interpretieren und verwerten kann, die er auf Anfrage vom DES erhält, wird erfindungsgemäß festgelegt, auf welche Weise die Bedeutung der Daten erklärt wird. Es wird eine gemeinsame "Sprache" geschaffen, die alle Softwarebausteine "verstehen" und an die sie sich halten müssen. Dafür werden Mechanismen in Form von Befehlen oder Routinen zur Verfügung gestellt, die es ermöglichen, Daten vom DES abzurufen und Daten an den DES zu übergeben.

Die Bedeutung von Daten wird durch ihre Attribute erklärt. So ist der Wert, welcher z.B. eine Versandstelle ausweist, erst durch seine Bezeichnung, also sein Attribut, für anfragende Softwarebausteine ansprechbar. Ein Softwarebaustein formuliert, "ich möchte den Wert der Versandstelle wissen". Wenn dagegen die anfragende Instanz (also der Softwarebaustein) und die angefragte Instanz (also der DES) unterschiedliche Sprachen sprechen würden, d.h. die Versandstelle unterschiedlich bezeichneten, indem sie dem Wert unterschiedliche Attribute zugeordnet haben, würde es kein Verstehen im oben beschriebenen Sinne geben. In diesem Fall müsste zunächst geklärt werden, dass Bezeichnung X des Wertes "Versandstelle" mit Bezeichnung "Y" des Wertes "Versandstelle" identisch ist. Dies hat sich als ein fehleranfälliges Verfahren herausgestellt.

Wird dem Wert, der die Artikelnummer darstellt, das Attribut "ARTICELNO" zugeordnet, so müssen alle Softwarebausteine, die den Wert der Artikelnummer anfordern, den Wert für das Attribut "ARTICELNO" anfordern. Ist dies nicht der Fall, weil einer der Softwarebausteine den Wert der Artikelnummer dem Attribut "ARTICELNUMBER" zugeordnet hat, während alle anderen von der "ARTICELNO" sprechen, so gehen nicht nur Einfachheit und Transparenz verloren. Vielmehr wird der Softwarebaustein, der sich nicht an die Konventionen hält, keine befriedigende Antwort erhalten. Die Verwendung dieses Softwarebausteins wird sinnlos, es sei denn, es gibt eine Gruppe von Softwarebausteinen, die etwa im Umfeld des Bestellvorgangs eingesetzt werden und ebenfalls "ARTICELNUMBER" verwenden. Die Wiederverwendung der Softwarebausteine, die "ARTICELNUMBER" verwenden, würde damit auf den Bestellvorgang eingeschränkt. Die Wiederverwendung der Softwarebausteine, die "ARTICELNO" verwenden, gilt damit z.B. nur für die Auftragsbearbeitung.

Daher wird, wie beschrieben, erfindungsgemäß sichergestellt, dass das Attribut, welches den Wert der Artikelnummer enthält, immer unter "ARTICELNO" firmiert, unabhängig davon, in welcher Umgebung das Attribut verwendet wird. Ein CRM-System sollte dem ebenso genügen wie das ERP-System oder eine Reparaturabwicklung, die sich mit der Reparatur von Artikeln beschäftigt.

Hierarchie der Daten

Neben der Standardisierung der Attribute spielt die Abbildung der hierarchischen Beziehung von Attributen in den Datenstrukturen eine entscheidende Rolle.

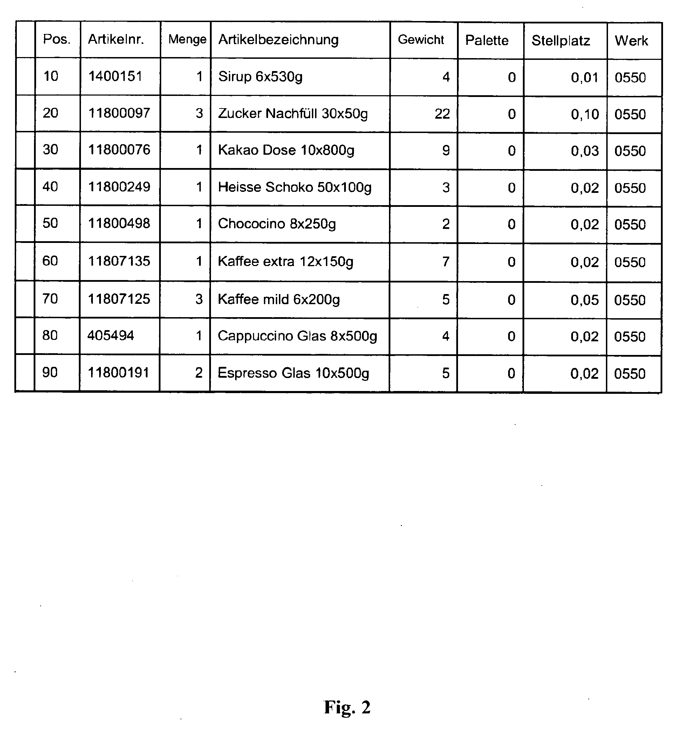

Es genügt nicht, wenn Softwarebausteine, die den Wert der Artikelnummer benötigen, den Wert für das Attribut "ARTICELNO" beim DES anfragen. Sehr oft sind mehrere Artikelnummern mit unterschiedlichen Werten im Spiel, weil Aufträge oder ähnliche Objekte mehrere Positionen enthalten, also mehrere Artikel bestellt wurden, vgl. Fig. 2. Fig. 2 zeigt einen Ausschnitt aus einer Auftragserfassungsmaske mit mehreren Artikeln. Daher muss die Position berücksichtigt werden, wenn der Wert des Artikels benötigt wird. Der Position "10" wird ein anderer Artikelwert zugeordnet sein als der Position "20". Eine Anfrage nach der bestellten Menge eines Artikels an den DES muss spezifischer sein, d.h. neben der Bezeichnung ORDER_QUANTITY als Attribut für die Bestellmenge muss noch geklärt werden, für welche Position die Menge angefordert wird. Da die Position Artikel, Menge und andere Attribute als zusammengehörig erklärt, kann die richtige Menge vom DES geliefert werden.

Die Hierarchie z.B. betriebswirtschaftlicher Daten lässt sich durch Baumstrukturen beschreiben. Bei allen betriebswirtschaftlichen Objekten steht an oberster Stelle die Identifikationsnummer, wie es die Bestellnummer, Rechnungsnummer, Auftragsnummer, etc. ist. Im Auftrag kann u. a. der Auftraggeber und Warenempfänger unterhalb der Auftragsnummer angesiedelt sein. Dies verhält sich anders, wenn die Artikel der Auftragspositionen an unterschiedliche Warenempfänger geliefert werden sollen. Dann ist die Auftragsposition das übergeordnete Element für den Warenempfänger. Selbstverständlich gilt das nicht nur Daten, die betriebswirtschaftliche Vorgänge repräsentieren, sondern auch für viele andere Arten von Daten.

Entscheidend ist, dass die hierarchische Beziehung für alle beteiligten Softwarebausteine und dem DES immer auf ein und dieselbe Weise abgebildet wird. Sprechen alle Softwarebausteine ebenso wie der DES die gleiche Hierarchiesprache, so ist ein nahtloser Informationsaustausch sichergestellt.

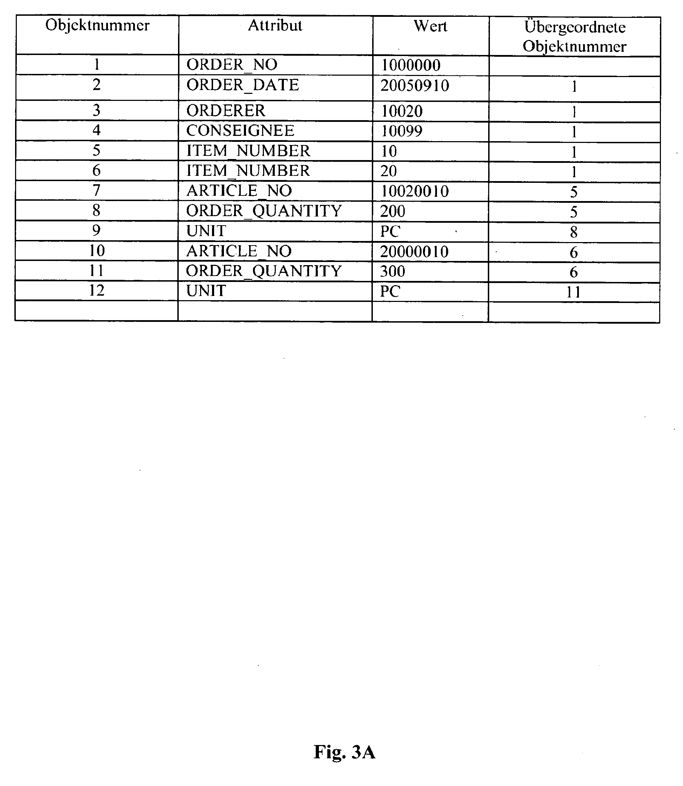

Soll z.B. innerhalb der Anwendung "Auftragsbearbeitung" eine Prüfung stattfinden, ob für die am Bildschirm eingegebene Warenempfängernummer ein Partnerstammsatz in der Datenbank existiert, der den Warenempfänger eindeutig identifiziert, so muss der betreffende Softwarebaustein "Partnerexistenzprüfung" zunächst den zugehörigen Partnerwert, d.h. die Identifikationsnummer des Partners, vom DES anfordern können. Dabei können sich unterschiedliche Situationen ergeben. Eine Version der Auftragserfassung führt den Warenempfänger nur auf der Kopfebene, d.h. es gibt nur einen Warenempfänger im Auftrag. Eine andere Version führt den Warenempfänger auf der Positionsebene, weil die Artikel nicht an einen, sondern an unterschiedliche Warenempfänger geliefert werden sollen. Der Softwarebaustein "Partnerexistenzprüfung" muss alle Situationen beherrschen, vgl. Fig. 3A.

Dem Entwickler des Softwarebausteins "Partnerexistenzprüfung" fehlt zum Entwicklungszeitpunkt das Wissen, in welchem Anwendungsprogramm der Softwarebaustein eingesetzt wird. Damit fehlt dem Entwickler auch das Wissen, welches die übergeordnete Objektnummer zur Laufzeit der Anwendung ist. Je nach dem, wie die Datenhierarchie ausgeprägt ist, kann, wie erläutert, der Wert des Warenempfängers auf Kopf oder Positionsebene positioniert sein. Erfindungsgemäß werden übergeordnete Objektnummern daher erst zur Programmlaufzeit programmseitig vergeben, da erst zu diesem Zeitpunkt die Werte der Attribute hinterlegt werden. Daher kann eine Anfrage nach einem bestimmten Wert lediglich das Attribut des geforderten Wertes enthalten und eine dynamische Angabe der übergeordneten Objektnummer. Für die dynamische Angabe der übergeordneten Objektnummer wird zum Entwicklungszeitpunkt des Softwarebausteins ein Feld vorgesehen, das erst zur Laufzeit einen Wert enthält.

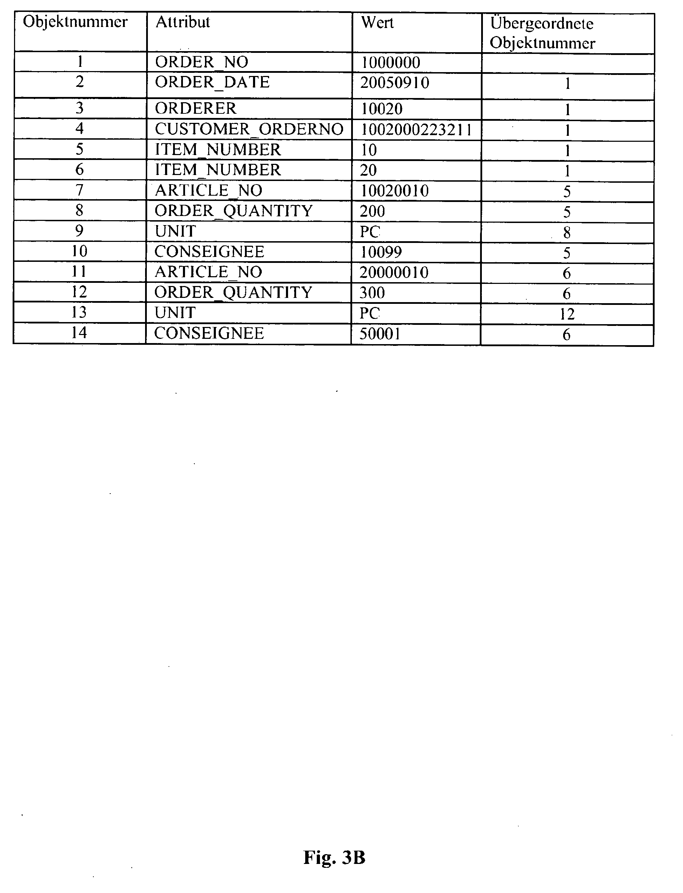

Aus Fig. 3A, B wird klar, dass jedem Attribut zur Programmlaufzeit eine Objektnummer zugeordnet wird, d.h. jedes Attribut und damit dessen Wert hat eine eindeutige Objektnummer. Die hierarchische Beziehung der Attribute wird über die Verknüpfung der Objektnummern der Attribute abgebildet, nicht durch die Verknüpfung der Werte selbst. Sind die übergeordnete Objektnummer des Attributs, dessen Wert nachgefragt wird, und das Attribut des Werts bekannt, so genügt dies, um auf Anfrage vom DES den richtigen Wert zu erhalten. In Fig. 3A gibt es nur ein Attribut, welches den Warenempfänger bezeichnet, nämlich "CONSEIGNEE" und zwar mit dem Wert "10099". Eine Anfrage an den DES mit dem Inhalt "Gib mir den Wert des Warenempfängers" würde daher auch dann ein eindeutiges Ergebnis erzielen, wenn die übergeordnete Objektnummer des Attributs "ORDER_NO" nicht mitgegeben würde.

Gibt es mehrere Warenempfänger, wie in Fig. 3B dargestellt, so muss die Objektnummer des Attributs "ITEM_NUMBER" als übergeordnetes Attribut des Attributs "CONSEIGNEE" und das Attribut "CONSEIGNEE" bei der Anfrage an den DES mitgegeben werden. In Fig. 3B würde die Anfrage "Gib mir den Wert des Warenempfängers" kein eindeutiges Ergebnis erzielen, da es, wie erwähnt, mehrere Warenempfänger gibt. Eine Anfrage "Grib mir den Wert des Warenempfängers für die übergeordnete Objektnummer 5" hingegen würde ein eindeutiges Ergebnis erzielen und den Wert "10099" zurückliefern. Eine Anfrage "Gib mir den Wert des Warenempfängers für die übergeordnete Objektnummer 6" würde den Wert "50001" zurückliefern.

Analoges gilt für die Beziehung von Artikel, Menge und Mengeneinheit. Die Menge (ORDER_QUANTITY) der Position (ITEM_NUMBER) mit dem Wert "10" ist durch die übergeordnete Objektnummer "5" derselben Positionsnummer zugewiesen, wie der Artikel (ARTICLE_NO) mit dem Wert "10020010". Beide verweisen auf die übergeordnete Objektnummer "5". Ist die übergeordnete Objektnummer bekannt, so kann der Wert für den Artikel und die zugehörige Bestellmenge angefragt werden.

Für die Zuweisung der übergeordneten Objektnummern unterscheidet die Erfindung das dynamische, statische und das hybriden Verfahren.

Beim dynamischen Verfahren kommt die relevante Objektnummer des Attributs, die das übergeordnete Element zum Warenempfänger darstellt, aus der Sicht des Softwarebausteins von außen. Damit ist der Softwarebaustein äußerst flexibel einsetzbar. Diese Objektnummer kann vom Vorgänger-Softwarebaustein bekannt gegeben werden und über einen Mittler (siehe Ereignisdienst weiter unten) dem nächsten Softwarebaustein zur Verfügung gestellt werden, bevor dieser seine Aktivität erledigt.

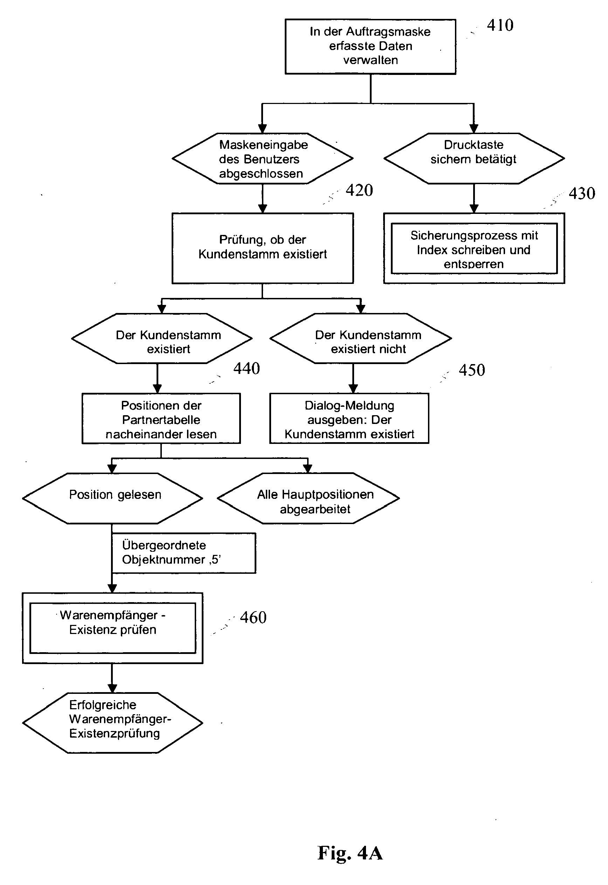

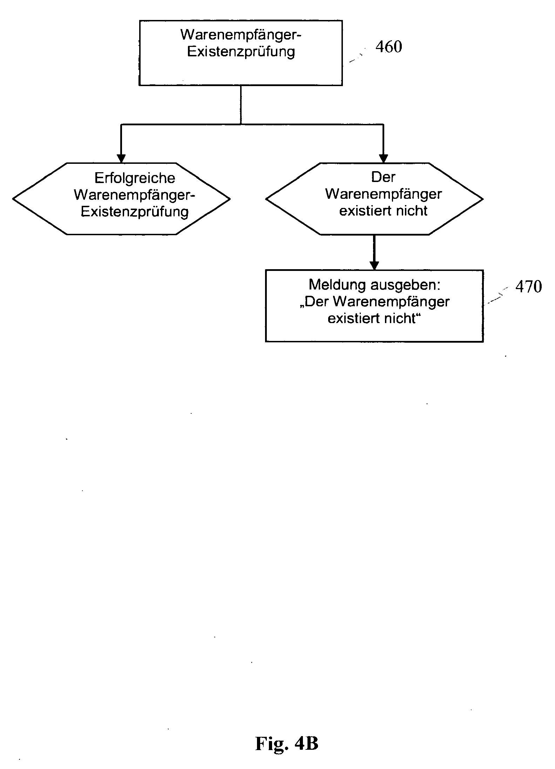

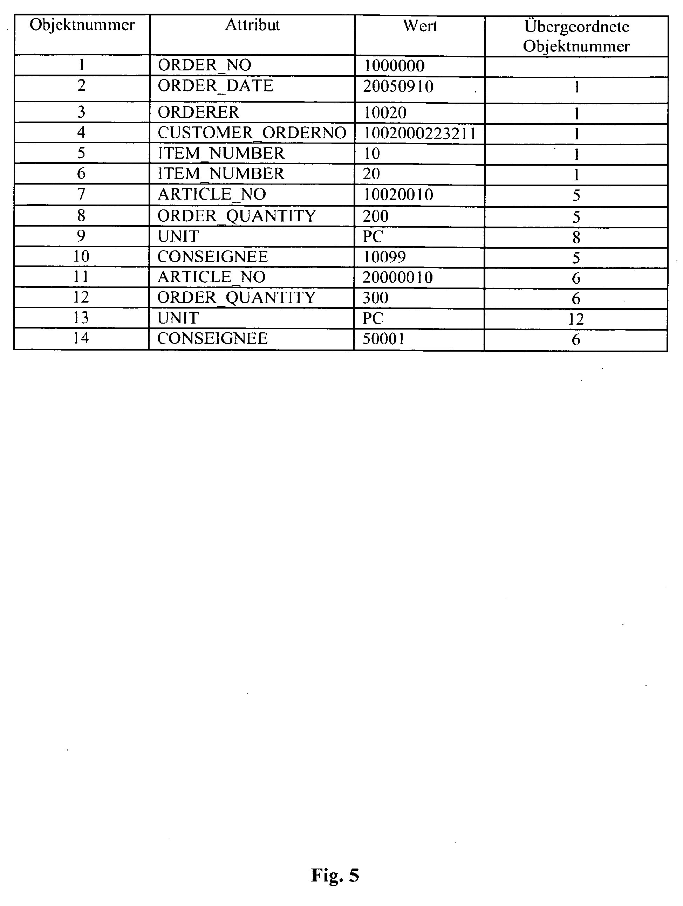

Soll im Folgenden der Warenempfänger, der sich auf der Positionsebene befindet, für die Positionen 10 und 20 geprüft werden, so kann ein spezieller Softwarebaustein, der alle Positionen einer Tabelle mit Partnerinformationen anfordert, eingesetzt werden. Dieser liest eine Position nach der anderen. Löst dieser Softwarebaustein ein Ereignis aus, sobald er eine Position gelesen hat, und gibt die zur Positionsnummer gehörende Objektnummer bekannt, so kann der anschließend vorgesehene Softwarebaustein "Partnerexistenzprüfung" diese übergeordnete Objektnummer nutzen und in Verbindung mit der Kennung "CONSEIGNEE" den Wert des Partners beim DES erfragen. Anschließend kann er seine Prüfung durchführen und das Ergebnis durch ein Ereignis bekannt geben, vgl. Fig. 4A, B und Fig. 5.

Zur Laufzeit der Anwendung, d.h. im Augenblick der Auftragserfassung durch den Sachbearbeiter, werden die einzelnen Softwarebausteine und Prozessbausteine prozessiert, vgl. Fig. 4A. Softwarebausteine sind einfach umrahmte Rechtecke 410, 420, 440, 450, Prozessbausteine sind durch doppelt umrahmte Rechtecke 430, 460 symbolisiert. Der Softwarebaustein 440 "Positionen der Partnertabelle nacheinander lesen" gibt im Beispiel der Fig. 4A bei der ersten Position die übergeordnete Objektnummer "5" (indirekt über den Ereignisdienst - vgl. die Beschreibung des Ereignisdienstes) an den Prozessbaustein 460 "Warenempfänger-Existenz prüfen". Hierbei ist zu beachten, dass das Rechteck mit dem Text "Übergeordnete Objektnummer 5" nicht der Teil der Prozessmodellierung ist. Es soll lediglich die Übergabe der übergeordnete Objektnummer verdeutlich werden.

Die übergeordneten Objektnummern für den Warenempfänger leiten sich aus der Hierarchietabelle gemäß Fig. 5 ab. Der Warenempfänger (CONSEIGNEE) 10099 ist in der Hierarchietabelle mit der übergeordneten Objektnummer 5 verknüpft. Der Ereignisdienst (vgl. weiter unten) übergibt die übergeordnete Objektnummer beim Aufruf des Softwarebausteins "Warenempfänger-Existenzprüfung".

Der Softwarebaustein 460 "Warenempfänger-Existenzprüfung" (vgl. Fig. 4B) schickt eine Anfrage an den DES nach dem Wert für das Attribut CONSEIGNEE (Warenempfänger) in Verbindung mit der übergeordneten Objektnummer 5 ab. Er erhält laut Hierarchietabelle gemäß Fig. 5, die vom DES verwaltet wird, den Wert "10099" zurück.

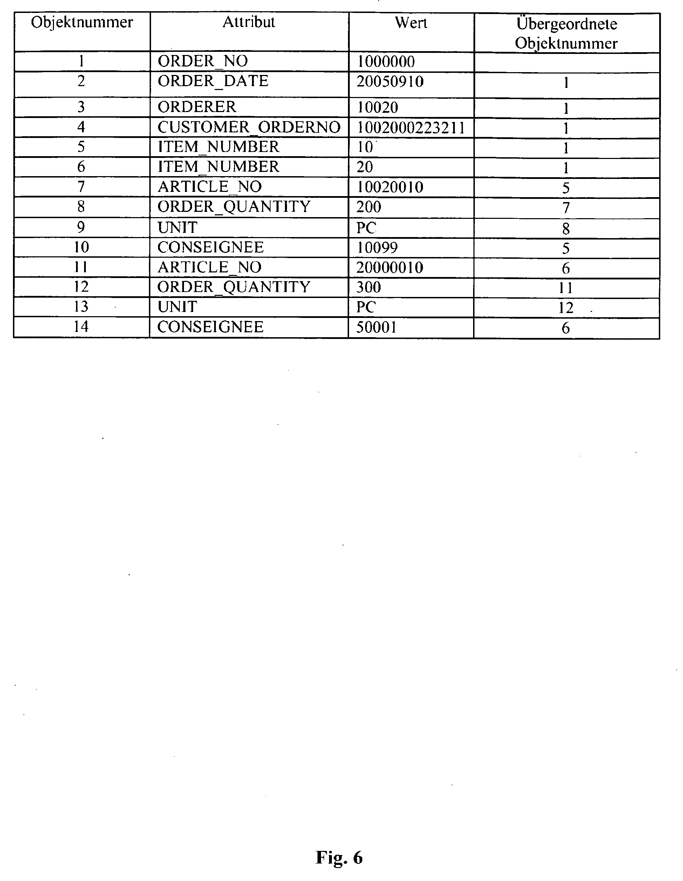

Selbstverständlich können die Daten hierarchisch auch anders angeordnet sein als beim Warenempfänger, vgl. Fig. 6. In diesem Beispiel ist die Bestellmenge (OR-DER_QUANTITY) der Objektnummer des Artikels (ARTICLE_NO) zugeordnet und nicht wie in Fig. 5 der Positionsnummer (ITEM_NUMBER).

Die bestellte Menge (ORDER_QUANTITY) kann z.B. durchaus unter der Artikelnummer angesiedelt sein, da es sich um die Bestellmenge des Artikels handelt.

In den obigen Beispielen war es für einen Softwarebaustein, der z. B.die Bestellmenge "200" des Artikels "10020010" benötigt, ausreichend, diese Menge durch Angabe der übergeordneten Objektnummer "5" der relevanten Position in Verbindung mit dem Attribut " ORDER_QUANTITY" vom DES zu erhalten. In diesem Beispiel ist die Bestellmenge aber der Objektnummer des Artikels zugeordnet. Um die uneingeschränkte Funktionalität des Softwarebausteins zu erhalten, wendet dieser die übergeordnete Objektnummer in erweiterter Form an. Findet er keine passende Menge, so kann er z.B. erneut beim DES anfragen, ob die Objektnummer der Artikelnummer mit der Objektnummer der Bestellmenge verknüpft ist. In diesem Beispiel wäre dies der Fall. Der Softwarebaustein könnte auch so parametrisiert werden, dass er die Menge über einen hinterlegten Pfad (z.B. "I-TEM_NUMBER .ARTICLE_NO") findet. Der Pfad besagt, dass die Menge sich auf Positionsebene unterhalb des Artikels befindet. Dieses Verfahren wird als statisches Verfahren bezeichnet. Das statische Verfahren kann für solche Fälle weitgehend vermieden werden, in dem die Regel lautet, dass alle Werte von Attributen, die logisch zu einer Tabellenzeile gehören, als übergeordnete Objektnummer die Objektnummer der entsprechenden Position haben. Ausnahmen, wie die Mengeneinheit, die immer der Menge untergeordnet ist, müssen vom Softwarebaustein berücksichtigt werden. Der Grund für die Sonderregelung der Mengeneinheit ist die Tatsache, dass oftmals mehrere Mengen in einer Positionszeile existieren, wie die bestellte Menge und die lieferbare Menge. Weicht die Mengeneinheit ab, d.h. es wurden sechs Stück bestellt und ein Karton wird geliefert, dann ist die Zugehörigkeit der Mengeneinheiten "Stück" und "Karton" eindeutig geregelt.

Beim hybriden Verfahren werden die dynamischen und statischen Aspekte zur Definition der Anfrage nach Werten bzw. für die Übergabe von Werten kombiniert. Das hybride Verfahren kann z.B. dann vorteilhaft eingesetzt werden, wenn die Daten auf einer bestimmten Ebene angefordert werden, die übergeordnete Objektnummer z.B. auf die Positionsnummer zeigt, der gerade prozessierte Softwarebaustein aber ein Ergebnis produziert, welches nicht auf der gleichen hierarchischen Ebene hinterlegt werden soll. Beim hybriden Verfahren werden die Daten demnach z.B. über das dynamische Verfahren angefordert, das ermittelte Ergebnis wird aber durch das statische Verfahren der Pfadangabe auf eine anderen hierarchischen Ebene hinterlegt.

Die Erfindung wird an Beispielen von Programmanwendungen zur Steuerung eines Prozesses mit betriebswirtschaftlichem Hintergrund näher erläutert. Selbstverständlich lässt sich die Erfindung auch für Anwendungen zur Steuerung von Prozessen anderer technischer Gebiete vorteilhaft einsetzen.

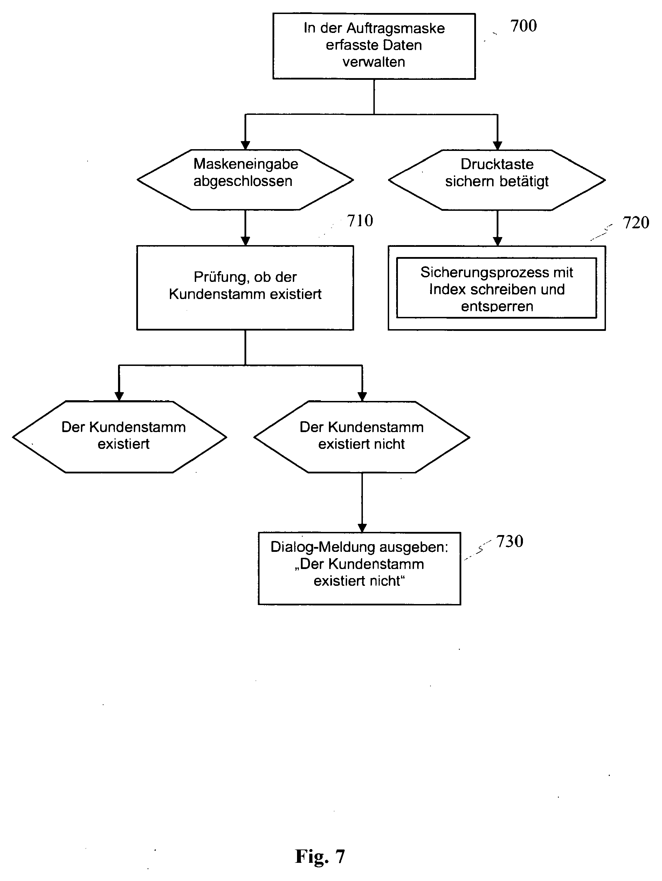

Fig. 7 zeigt eine graphische Darstellung eines betriebswirtschaftlichen Ablaufs am Beispiel einer Auftragsdatenerfassung. Nach Eingabe der Auftragsdaten durch den Sachbearbeiter in die Auftragserfassungsmaske werden mit der Datenfreigabe die eingegebenen Daten angenommen und verwaltet (Aktivität "In der Auftragsmaske erfasste Daten verwalten" des Softwarebausteins 700). Dann wird gemäß dem Prozessmodell die Aktivität "Prüfe, ob der Kundenstamm existiert" des Softwarebausteins bei 710 prozessiert, weil das Ereignis "Maskeneingabe abgeschlossen" durch die Datenfreigabe ausgelöst wurde. Existiert der Kundenstamm nicht, d.h. wurden noch keine Daten für den Kunden erfasst, so wird das Ereignis "Der Kundenstamm existiert nicht" ausgelöst. Dieses ist mit einer Aktivität verbunden, die für Fehlermeldungen zuständig ist. Der Sachbearbeiter würde in diesem Fall am Bildschirm eine Dialog-Meldung erhalten mit dem Text "Der Kundestamm existiert nicht", ausgelöst durch Softwarebaustein bei Rechteck 730.

Alternativ kann ein Protokollsatz statt einer Meldung geschrieben werden oder in die Stammdaten-Erfassungsmaske verzweigt werden.

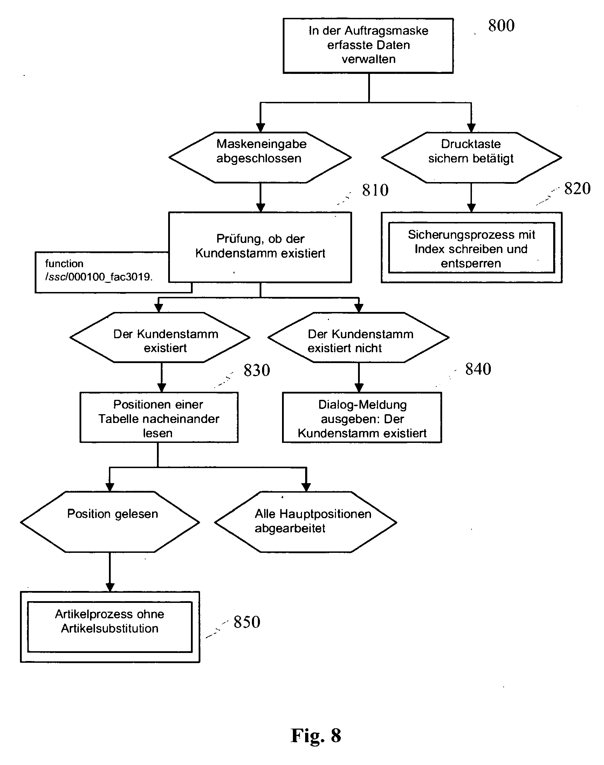

Die einzelnen Aktivitäten, wie die Prüfung, z.B. ob Kundenstammdaten existieren, werden als graphisches Symbol (hier Rechteck 710) im Prozessmodell mit einem Text, der die Aktivität beschreibt, hinterlegt. Die verfügbaren Aktivitäten können aus einer Palette ausgewählt werden. Die untere Linie des Rechtecks enthält Ereignisse (hier als Sechseck dargestellt), die besagen, ob die Kundenstammdaten existieren oder nicht. Dem Rechteck 730 ist ein Softwarebaustein zugeordnet, der zur Laufzeit der Auftragserfassungssoftware prozessiert wird und je nach Ergebnis ein entsprechendes Ereignis auslöst. Unter Softwarebaustein wird ein Programm verstanden, das eine bestimmte Aktivität erledigt. Von dem ausgegebenen Ereignis hängt der weitere Prozessverlauf ab, vgl. Fig. 8.

In Fig. 8 ist dem Rechteck 810 "Prüfe, ob der Kundenstamm existiert" ein Softwarebaustein "/SSC/000100_FAC3019" zugeordnet. Diese Zuordnung wird allerdings nicht explizit ausgewiesen. Sie dient hier nur zur Veranschaulichung. Allen anderen Rechtecken ist ebenfalls jeweils ein Softwarebaustein oder ein Prozessbaustein zugeordnet. Als Prozessbausteine werden hier Softwarebausteine bezeichnet, die ihrerseits wenigstens zwei Softwarebausteine enthalten.
Die Erfindung bietet die nahezu uneingeschränkte Kombination von vorgefertigten Bausteinen durch Prozessmodellierung zur Erstellung oder Anpassung von betriebswirtschaftlichen Anwendungen bei Vermeidung von Schnittstellenaufwand. Unter Schnittstellenaufwand wird der Aufwand verstanden, der bei Softwarebausteinen, die mittels der konventionellen Programmiermethoden erstellt wurden, entsteht, wenn von einem Softwarebaustein ein anderer aufgerufen wird, bzw. wenn eine Programmsteuerroutine einen Softwarebaustein (zunehmend auch Service genannt) nach dem anderen aufruft. In solchen Fällen muss der Aufrufende (Softwarebaustein oder Programmsteuerroutine) dem aufgerufenen Softwarebaustein diejenigen Daten übergeben, die der aufgerufene Softwarebaustein benötigt, um seine Aktivität zu erledigen.

Anwendungen, die auf dem erfindungsgemäßen Verfahren basieren, können jederzeit durch Hinzufügen oder das Entfernen von Softwarebausteinen in der Prozessbeschreibung verändert werden, und zwar alleine durch das Einfügen oder das Entfernen der Symbole im Prozessmodell.

Die Möglichkeit, Softwarebausteine beliebig kombinieren zu können, impliziert Wiederverwendung von Softwarebausteinen. Wenn Wiederverwendung erfolgreich sein soll, müssen zunächst die Bedingungen für Wiederverwendung geklärt werden.

Komplexe Softwarebausteine lassen sich weniger gut wiederverwenden als Bausteine von geringerer Komplexität. Komplexe Softwarebausteine erledigen tendenziell mehrere Aktivitäten. Wird aber nur ein Teil der Aktivitäten zur Abbildung einer bestimmten Anforderung benötigt, so ist der komplexe Softwarebaustein nicht ohne Einschränkungen wiederverwendbar.

Erledigt ein Softwarebaustein jeweils nur eine Aktivität, kann er also tendenziell öfter verwendet werden. Mit erhöhter Wiederverwendbarkeit sinkt die Anzahl jeweils neu (bzw. individuell) zu programmierenden Softwarebausteine.

Was es heißt, dass ein Softwarebaustein nur eine Aktivität lösen darf, soll an einem Beispiel gezeigt werden. Soll in einem Softwarebaustein der Liefertermin für eine Ware bestimmt werden, so ist dabei von Bedeutung, an welchem Ort sich die Versandstelle der Ware befindet, um die Route für den Transport der Ware berechnen zu können. Die Route gemeinsam mit den vereinbarten Anliefertagen beim Warenempfänger bestimmt den Liefertermin. Ein Softwarebaustein ermittelt die Versandstelle, ein anderer die Anliefertage und ein weiterer die Route. Spielt die Ermittlung der Versandstelle in einem anderen Kontext eine Rolle, z.B. welches Transportmittel (LKW oder Schiff) verwendet werden soll, um die Ware von der Versandstelle abzuholen, so ist der Softwarebaustein zur Ermittlung der Versandstelle auch dort verwendbar. Der Softwarebaustein erfüllt offensichtlich nur eine Aktivität, nämlich die Ermittlung der Versandstelle. Würde ein Softwarebaustein zur Festlegung des Liefertermins ermitteln, wo sich die Versandstelle der Ware befindet, welches die Anliefertage sind und welche Route beim Transport eingeschlagen werden soll, so würde der Softwarebaustein zur Festlegung des Liefertermins zweifelsohne drei Aktivitäten erfüllen. Der Softwarebaustein zur Festlegung des Liefertermins ist daher kaum für die Ermittlung des geeigneten Transportmittels geeignet. Diesem Softwarebaustein werden die Daten zur Ermittlung der Route und der Anliefertage, in einem Kontext, bei es lediglich um die Ermittlung des geeigneten Transportmittels geht, wahrscheinlich nicht zur Verfügung stehen. Damit muss der Softwarebaustein fehlerhaft enden, denn er kann diese Aktivität nicht erfüllen. Aber selbst wenn ihm die Daten zur Verfügung ständen, würde er für diese Fragestellung irrelevante Aktivitäten erledigen.

### Aufbau der Softwarebausteine

Erfindungsgemäß ist der Aufbau der Softwarebausteine einheitlich. Die erfindungsgemäßen Softwarebausteine arbeiten per Definition nur eine Aktivität ab.

Dazu holen sie sich die benötigen Daten, ermitteln ein Ergebnis und stellen die ermittelten Daten mittels des DES allen am Prozess beteiligten Softwarebausteinen zur Verfügung. Das Holen von Daten geschieht nach dem weiter oben beschriebenen normierten Verfahren, ebenso wie die Abgabe von ermittelten oder geänderten Daten. Zum Abschluss der Aktivität wird, wie dargelegt, auch das Ergebnis der Aktivität bekannt gegeben. Dazu löst der Softwarebaustein je nach Ergebnis ein Ereignis aus - i.d.R. ist dies das Ereignis "Aktivität erfolgreich erledigt" oder "Aktivität nicht erledigt".

Ereignisse werden zur Programmlaufzeit immer mit derselben Methode, also mit demselben Befehl gefeuert. Erfindungsgemäß ist dies einzig hier zugelassene Art, ein Ergebnis bekannt zu geben. Werden Ereignisse zur Programmlaufzeit immer mit derselben Methode gefeuert, lässt sich durch generische Prüfroutinen validieren, ob die im Prozessmodell gezeichneten Ereignisse auch im Softwarebaustein implementiert sind. Andererseits lässt sich durch eine generische Prüfroutine feststellen, ob alle Ereignisse im Prozess mit Softwarebausteinen verbunden sind. Befindet sich der Softwarebaustein nicht am Ende der Ereigniskette, so ist der Prozess nicht komplett und kann zur Laufzeit u. U. zu fatalen Fehlern führen. Ein Beispiel ist der Eingang von Aufträgen per EDI (Electronic Data Interchange), bei denen ein unbehandeltes Ereignis dazu führen kann, dass der Eingangsprozess abreißt, d.h. die restlichen Aufträge nicht mehr verarbeitet werden.

Eine weitere Normierung legt fest, dass ein Softwarebaustein ohne User-Interface (UI) maximal zwei Ereignisse haben sollte. Für Softwarebausteine mit UI gilt dies nicht, da diese die Tendenz haben, mehr als zwei Ereignisse zu benötigen. Denn es gibt oft zahlreiche Buttons für die Navigation, bei deren Betätigung Ereignisse gefeuert werden. Ausgenommen bei UI- Softwarebausteinen wird damit einerseits gewährleistet, dass der Softwarebaustein nur eine Aktivität erledigt. Andererseits ist es möglich, durch Prüfroutinen Softwarebausteine aufzuspüren, die mehr als zwei Ereignisse haben. Ein Beispiel hierfür ist ein Softwarebaustein, der lediglich Zeile für Zeile einer Tabelle liest. Die Ereignisse dieses Softwarebausteins könnten besagen, dass eine Zeile gelesen wurde, dass der Inhalt eines der Attribute der Positionszeile geändert wurde, dass alle Positionen gelesen wurden, und dass die Tabelle keine Position enthält.

Besser ist ein Softwarebaustein, der lediglich prüft, ob die Tabelle tatsächlich Positionen enthält. Ein weiterer Softwarebaustein liest eine Zeile nach der anderen. Ein Dritter prüft, ob sich der Inhalt bestimmter Attribute der Positionszeile geändert hat. Damit hat jeder Softwarebaustein nur zwei Ereignisse - der Prozess wird transparenter.

### Wiederverwendung von Prozessbausteinen

Prozessbausteine umfassen Softwarebausteine oder eine Kombination von Softwarebausteinen und Prozessbausteinen, wobei die Prozessbausteine ihrerseits selbst wieder eine Kombination von Softwarebausteinen und Prozessbausteinen umfassen können - ohne Einschränkung bezüglich der Hierarchieebenen.

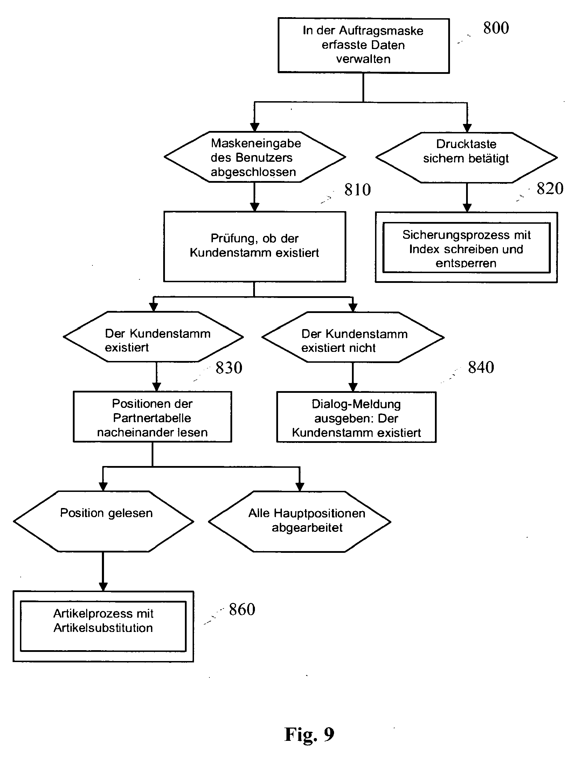

Die in Fig. 9 illustrierte Auftragsbearbeitung umfasst atomare Softwarebausteine und die Prozessbausteine "Artikelprozess mit Artikelsubstitution" und "Sicherungsprozess mit Index Schreiben und Entsperren".

Nochmals zurückkommend auf Fig. 1B, zeigt diese den Prozessbaustein "Artikelprozess mit Artikelsubstitution" auf der Detailebene. Zunächst stellt eine Aktion 100 fest, ob der Artikel geändert wurde. Dies kann durch Neueingabe oder Änderung eines bereits eingegeben Artikels in der Auftragserfassungsmaske geschehen sein. Hinter dieser Aktion verbirgt sich der Entscheidungsdienst, ein Softwarebaustein mit extrem hoher Widerverwendbarkeit. Wurde der Artikel geändert, so wird zum Zeitpunkt der Auftragserfassung vom Anwendungsprogramm, welches aus dieser Figur entstand, das Ereignis "Ja" gefeuert. Danach läuft die Artikelsubstitution 110, ab, etc.

Die Wiederverwendung der Prozessbausteine ist möglich, wenn sie der beschriebenen erfindungsgemäßen Architektur folgen. Prozessbausteine nutzen nur Softwarebausteine, die den beschriebenen Standards und Normierungen entsprechen. Der Behandlung der Softwarebausteine innerhalb eines Prozessbausteins ist für alle Prozessbausteine gleich.

Prozessbausteine finden Wiederverwendung, wenn z.B. lediglich das Layout des User-Interfaces unterschiedlich ist. In vielen Fällen führt die Navigation im UI von verschieden Ausgangspunkten zu den gleichen Prozessen, wie der Anzeige eines Protokolls über den Verlauf der Auftragsbearbeitung. Die Wiederverwendung von Prozesslogik ist die Folge.

Prozesse finden ebenfalls Wiederverwendung, wenn sie bestimmten Mustern folgen. So können die Prüfung der Artikelexistenz und die Ergebnisbehandlung als Prozess zusammengefasst werden und somit häufig wiederverwendet werden.

Einen entscheidenden Vorteil bietet die Prozessmodellierung mit der Möglichkeit, rasch Prozesse zu ändern und die wiederverwendbaren Teile in neue Prozesse einzubinden. Damit wird es für den Softwarehersteller leichter, mehrere Varianten eines Themas auszuliefern, statt alles in einem Ansatz abzubilden.

### Graphische Prozessmodellierung

Erfindungsgemäß definiert die Prozessmodellierung den Aufruf der Bausteine inklusive deren Reihenfolge auf stets gleiche Weise. Softwarebaustein und Prozessbaustein erscheinen selbst als "Black Box", hier in Form von Rechtecken. Der Programmcode bleibt auf dieser Ebene verborgen. Ergebnisse werden über Ausgänge aus der Black Box bekannt gegeben. Sowohl Black Box, als auch die Ergebnisse der Softwarebausteine, die durch Ereignisse ausgedrückt werden, haben eine normierte graphische Darstellung. Eine besonders geeignete Darstellungsform sind Ereignis-Prozess-Ketten. Durch die graphische Verknüpfung von Ereignissen mit den Symbolen der Softwarebausteine wird der Prozessverlauf bestimmt. Die graphische Prozessmodellierung selbst ist eine wesentliche Komponente der Standardisierung. Alle Bereiche der Programmlogik werden auf die gleiche Weise dargestellt und unterliegen nicht den individuellen Vorlieben und Gewohnheiten von Entwicklern. Daher stellt die Prozessmodellierung auch Widerverwendbarkeit auf der Ebene der Gestaltung von Prozessen sicher. Gleichzeitig trägt sie dazu bei, dass Prozessdokumentation und tatsächlicher Prozessverlauf untrennbar verbunden sind. Jede Änderung des Prozessmodells dokumentiert diese implizit. Jede Änderung des Prozessmodells ändert die Anwendung.

Die Softwarebausteine sorgen im Zusammenspiel mit der Prozessmodellierung für die notwendige Flexibilität auf der Detailebene. Sie haben die höchste Widerverwendbarkeit.

### Ereignisse

Ereignisse sind neben den Softwarebausteinen und Prozessbausteinen in der erfindungsgemäßen Ausgestaltung eine weitere Voraussetzung, um Anwendungen ohne Schnittstellen zu erstellen. Ereignisse sind sowohl Bestandteil der Softwarebausteine als auch der Prozessbausteine. Wurde etwa eine Aktivität innerhalb eines Softwarebausteins erfolgreich abgearbeitet, so wird dies als Ereignis bekannt gegeben. Graphisch kann dies, z.B. wie in Darstellungen von Ereignis-Prozess-Ketten üblich, in Form eines sechseckigen Symbols erfolgen. Dieses wird mit einem rechteckigen Symbol, als Darstellung für einen Softwarebaustein, graphisch verbunden, um die Verbindung zwischen Softwarebaustein und Ereignis zu definieren.

Softwarebausteine mit Ereignissen als Ende-Kriterium haben den Vorteil, dass die ihnen innewohnende Funktionalität in Form von Programmcode zunächst im Hintergrund bleibt. Die Aktivität kann aus der Beschreibung des Softwarebausteins hervorgehen, das Ergebnis wird über Ereignisse bekannt gegeben. Da hohe Wiederverwendbarkeit überschaubare Softwarebausteine nach sich zieht, kann die Beschreibung entsprechend kurz aber trotzdem aussagekräftig sein. Zum Beispiel ist der technische Vorgang einer Artikelexistenzprüfung ohne Interesse für den Prozessgestalter, wenn die Bezeichnung der Aktivität eindeutig aussagt, was die Aktivität des Softwarebausteins ist. Der Prozessgestalter muss lediglich erkennen können, was der Softwarebaustein leistet, welches Ergebnis erzielt werden kann und wie der weitere Prozessverlauf ist. Die technische Implementierung kann und soll im Hintergrund bleiben. Auf diese Weise wird Komplexität aus dem Gesamtprozess genommen, da kein Detailwissen den Blick für das Wesentliche verstellt.

Bei Softwarebausteinen, die gemäß den genannten Regeln erstellt worden sind und entsprechend funktionieren, haben Änderungen wie die Fehlerbehebung innerhalb der Softwarebausteine keinen Anpassungsbedarf der Umgebungsbausteine zur Folge, solange nur die Ereignisse die gleichen bleiben. Da es i.d.R. nur zwei Ereignisse gibt - "erfolgreich" und "nicht erfolgreich" -, besteht auch keine Notwendigkeit, an den auszugebenden Ereignissen etwas zu ändern.

Prozessbausteine mit Ereignissen als Ende-Kriterium haben analog zu den Softwarebausteinen den Vorteil, dass die ihnen innewohnende Funktionalität zunächst im Hintergrund bleibt. Nur auf Anfrage - z.B. durch Doppelklick auf das Symbol des Prozessbausteins im Prozessmodell - wird sein Innenleben sichtbar.

Die Verknüpfung von Softwarebausteinen und/oder Prozessbausteinen mit den Ereignissen des Vorgängers tragen wesentlich dazu bei, dass beim Aufruf kein Schnittstellenaufwand anfällt. Sie trägt auch zum Einsatz des Ereignisdiensts bei, der unter der nächsten Rubrik beschrieben wird.

### Ereignisdienst

Der erfindungsgemäße Ereignisdienst regelt den geordneten Aufruf der erfindungsgemäßen Softwarebausteine zur Laufzeit. Der Ereignisdienst sorgt dafür, unter welcher Bedingung, zu welchem Zeitpunkt und in welcher Reihenfolge Softwarebausteine prozessiert werden.

Dazu werden erfindungsgemäß dem Ereignisdienst bestimmte Metadaten aus dem Prozessmodell zur Verfügung gestellt. Die Metadaten enthalten die Information, welcher Softwarebaustein zum Prozessstart aufgerufen wird und welcher Softwarebaustein als nächstes prozessiert werden soll. Welcher Softwarebaustein als nächstes prozessiert werden soll, ist im Prozessmodell abhängig von den möglichen Ereignissen definiert worden. Die Beziehung zwischen den Ereignissen und den Softwarebausteinen ist Bestandteil der Metadaten und steht dem Ereignisdienst zur Programmlaufzeit zur Verfügung. Als Beispiel ist Softwarebaustein A im Startprozess des Prozessmodells als erster Softwarebaustein definiert, d.h in einer grafischen Darstellung als Rechteck gezeichnet. Der Softwarebaustein A kennt die Ereignisse E1 und E2. D.h. je nach interner Programmlogik von Softwarebaustein A wird bei der Ausführung des Softwarebausteins A das Ereignis E1 oder E2 ausgelöst.

Ist im Prozessmodell Ereignis E1 des Softwarebausteins A mit dem Softwarebaustein B und Ereignis E2 mit dem Softwarebaustein C verbunden, so ruft der Ereignisdienst den Softwarebaustein B auf, wenn Softwarebaustein A das Ereignis E1 auslöst. Löst der Softwarebaustein A das Ereignis E2 aus, so wird Softwarebaustein C aufgerufen. Für Softwarebausteine B und C ist es unwichtig, welcher Softwarebaustein zuvor an der Reihe war. Sie kümmern sich nur darum, die benötigten Daten vom DES zu erhalten. Selbstverständlich ist es dabei wichtig, dass bestimmte Softwarebausteine zuvor prozessiert wurden, insbesondere diejenigen, welche die von Softwarebaustein B und C benötigten Informationen an den DES geliefert haben. Unwichtig ist jedoch aus Sicht der Softwarebausteine B und C, welche Softwarebausteine dies waren.

Analoges gilt auch für Prozessbausteine, die selbst stets als erstes Element einen Softwarebaustein oder einen Prozessbaustein enthalten. Ist das erste Element ein Prozessbaustein, so geht die Suche weiter, bis ein Softwarebaustein an erster Stelle steht. Dieser löst wiederum laut Prozessmodell Ereignisse aus, die mit anderen Softwarebausteinen oder Prozessbausteine verbunden sind.

Der Ereignisdienst ist damit der Mittler zwischen Ereignissen und Softwarebausteinen. Seine Informationen erhält er ausschließlich aus dem Prozessmodell.

Auch der erfindungsgemäße Ereignisdienst trägt zur Wiederverwendbarkeit bei, da er die Auswertung von Ereignissen immer auf dieselbe Art und Weise verarbeitet.

Während bei den bisher bekannten Ansätzen die Steuerungsroutine zur Verarbeitung bestimmter Funktionen oder so genannter Services immer wieder neu programmiert wird, wird der erfindungsgemäße Ereignisdienst nur einmal programmiert und wird immer und ausschließlich für diesen Zweck verwendet. Daher ist er auch Teil der Standardisierung von Softwareanwendungen.

Erschwerend wirkt sich bei herkömmlichen Ansätzen der Softwareentwicklung aus, dass bei dem Aufruf der Programmroutinen, die möglicherweise selbst wieder Programmroutine und Unterroutine aufrufen, Schnittstellen versorgt werden müssen. Den von der Steuerroutine aufgerufenen Programmen müssen über Schnittstellen Informationen übergeben werden, eine Tatsache, die den Vertretern anderer Ansätze erhebliche Sorgen bereitet. Einerseits bedeutet dies Aufwand. Andererseits können sich Schnittstellen ändern - dann entstehen Versionen, die verwaltet werden müssen und weiteren Schnittstellenaufwand nach sich ziehen. Die Versorgung von Schnittstellen kann nach unterschiedlichsten Verfahren erfolgen und birgt damit viele Möglichkeiten, Fehler zu machen und den Betrachter zu verwirren.

Mit dem Einsatz des erfindungsgemäßen Ereignisdiensts hingegen wird erreicht, dass die immer wiederkehrende Anforderung, Programme in einer bestimmten Reihenfolge aufzurufen und deren Schnittstellen zu versorgen, entfällt. Fehler werden vermieden, und die Lesbarkeit der Anwendung durch die Gleichförmigkeit des Verfahrens wird deutlich erhöht.

### Entscheidungsdienst

Der erfindungsgemäße Entscheidungsdienst wird durch einen ein Softwarebaustein realisiert, der ebenfalls wie der Ereignisdienst einen sehr spezifischen Service bietet. Seine Aufgabe ist es, abhängig von den aktuellen Werten ausgewählter Attribute eines Vorgangs, wie der Auftragserfassung, eine Entscheidung zu treffen. Das Ergebnis wird in Form von Ereignissen veröffentlicht. Der Entscheidungsdienst selbst verändert keine Daten, noch ermittelt er neue Daten. Beispielsweise kann der Entscheidungsdienst im Rahmen der Auftragsbearbeitung die Aufgabe haben, zu prüfen, ob das Wunschlieferdatum zeitlich hinter dem Tagesdatum liegt. Ist dies der Fall, so wird dies durch dasjenige Ereignis bekannt gemacht, welches besagt, dass die Bedingung zutrifft. Ist dies nicht der Fall, so gibt ein anderes Ereignis bekannt, dass die Prüfung zu einem negativen Ergebnis geführt hat. Damit sind wesentliche Entscheidungen, die ansonsten im Programm auf die eine oder andere Art abgebildet werden können, auf ein und dieselbe Weise behandelt. Diese standardisierte Vorgehensweise ermöglicht generische Routinen, die auf diesem Wissen aufsetzen.

### Erweiterbarkeit

Die Palette der vorhandenen Softwarebausteine kann jeder Zeit angereichert werden. Es besteht somit kein Zwang, nur auf vorhandene Softwarebausteine zurückgreifen zu müssen. Der Prozess kann jederzeit durch Individualprogrammierung erweitert werden, solange die Prinzipien der Architektur eingehalten werden. Zu große Einheiten können immer noch zu einem späteren Zeitpunkt in granulare Softwarebausteine zerlegt werden. Die Abschnitte Prozessvorlagen und Prozesskonfiguration geben Auskunft über die Anpassungsmöglichkeiten. Erweiterungen unterliegen dem gleichen Prinzip. Prozessbausteine können durch umfangreichere oder reduzierte Prozessbausteine ersetzt werden. Zusätzlich benötigte Softwarebausteine und Prozessbausteine können in bestehende Prozesse eingefügt werden.

Prozessvorlagen

Graphisch modellierte Prozesse liefern anwendungsspezifische Inhalte - z.B. so genannten Business Content. Je mehr Prozesse bereits abgebildet sind, desto höher ist die Wahrscheinlichkeit, dass ein hoher Abdeckungsgrad bei potentiellen Interessenten erreicht wird. Diese Prozesse können entweder unverändert gesetzt werden oder an die speziellen Anforderungen der Kunden angepasst werden. Bestimmte Prozessbausteine, die sich i.d.R. auf tieferen Hierarchieebenen des Gesamtprozesses befinden, können durch individualisierte Prozessbausteine ersetzt werden. Die individualisierten Prozessbausteine wiederum können von Prozessbausteinen abgeleitet werden oder völlig neu aus den vorhandenen Softwarebausteinen kombiniert werden. Dabei wird durch die Entkoppelung der Softwarebausteine mittels Ereignisse gewährleistet, dass bestehende Funktionen durch solche Anpassungen nicht berührt sind. Bei klassisch programmierter Standardsoftware gefährden Änderungen häufig andere Funktionsbereiche, weil z.B. Anpassungen an Datenstrukturen oder Schnittstellen vorgenommen werden müssen, die sich durch den Gesamtprozess ziehen.

Durch die Bereitstellung von Gesamtprozessen, wie etwa dem Prozess der Auftragsbearbeitung bis zur Rechnungsstellung als so genannte Best-Practise-Lösung, wird die Kluft zwischen den hohen Aufwendungen für Individualprogrammierung im Vergleich zu Standardsoftware geschlossen. Denn Standardsoftware ist keineswegs sofort einsetzbar, sondern erst nach umfangreichen Anpassungsarbeiten in Form von Customizing. Das erfindungsgemäße Verfahren erlaubt es, die Anforderungen des Kunden im gleichen Maße abzudecken, wie das bei Standardsoftware der Fall ist. Allerdings wird der Programmumfang, d.h. die Anzahl und Funktionen nur ein Bruchteil des Umfangs der Standardsoftware ausmachen, weil der Kunde genau das geliefert bekommt, was er benötigt. Durch den Wegfall von nicht benötigten Funktionen und der Transparenz, die durch einen geringeren Funktionsumfang und einer maßgeschneiderten Anwendung entsteht, verringert sich der Aufwand für Customizing im Vergleich zur Standardsoftware auf einen Bruchteil.

### Prozesskonfiguration

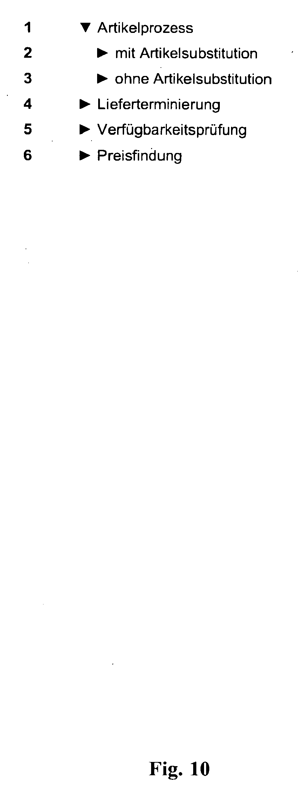

Die Erfindung geht davon aus, dass nur maßgeschneiderte Lösungen die Anforderungen der Kunden wirklich treffen. Best-Practise-Lösungen eigenen sich hervorragend, um daraus maßgeschneiderte Lösungen abzuleiten. Diese Ableitung kann über einen Konfigurationsassistenten stattfinden, der mittels Frage/Antwort-Technik die optimalen Prozesse herausfiltert. Dabei wird etwa aus den Varianten des Prozessbausteins "Artikelprozess", der für die Änderung der Artikelnummer bei der Belegverarbeitung verantwortlich ist, eine Variante "Artikelprozess mit Artikellistung" ausgewählt. Enthält der ursprüngliche Gesamtprozess für die Auftragsbearbeitung den Subprozess "Artikelprozess mit Artikelsubstitution", so wird dieser durch den Prozessbaustein "Artikelprozess mit Artikellistung" ersetzt, vgl. Fig. 10.

Der Konfigurationsassistent bietet beispielsweise die in Fig. 10 illustrierte Auswahl an. Wählt der Kunde "Artikelprozess mit Artikelsubstitution" aus, so erhält er den in Fig. 9 illustrierten Prozess. Dieser Prozess ist eine Auftragerfassung für Kundengruppe 2. Dieser Kundengruppe sind alle Konsumgüterhersteller zugeordnet. Konsumgüterhersteller arbeiten i.d.R. mit Artikelsubstitution. Daher wird der mit den roten Eckpunkten markierte Prozessbaustein "Artikelprozess mit Artikelsubstitution" prozessiert. Dort wird nach unter vorher vom Kunden festgelegten Bedingungen ein bestellter Artikel durch einen anderen oder eine andere Variante des Artikels ersetzt.

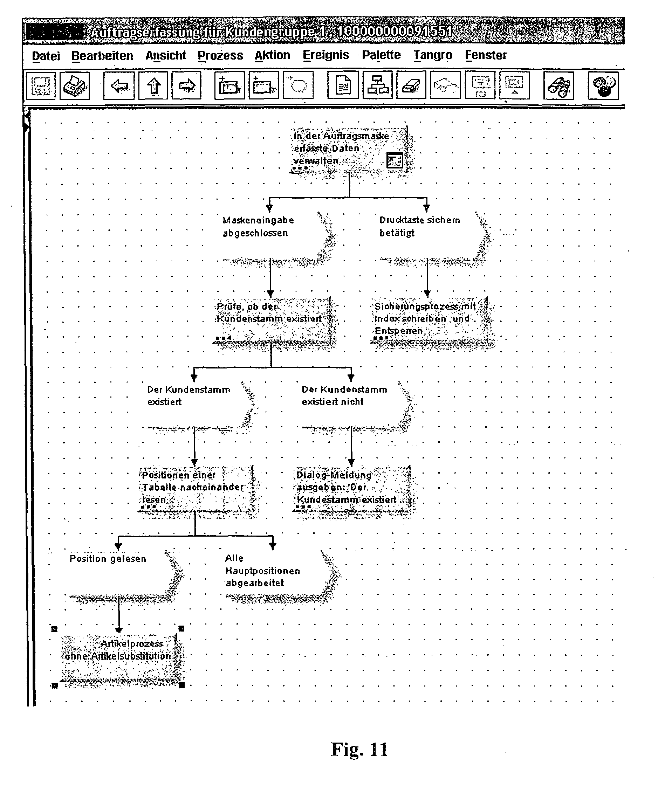

Trifft der der Kunde im Menü der Fig. 10 die Auswahl "Artikelprozess ohne Artikelsubstitution", erhält er den Prozess gemäß Fig. 11. Es handelt sich um eine Auftragerfassung für Kundengruppe 1. Dieser Kundengruppe arbeitet grundsätzlich ohne Artikelsubstitution. Daher wird der mit den Eckpunkten markierte Prozessbaustein "Artikelprozess ohne Artikelsubstitution" prozessiert.

Beispiel

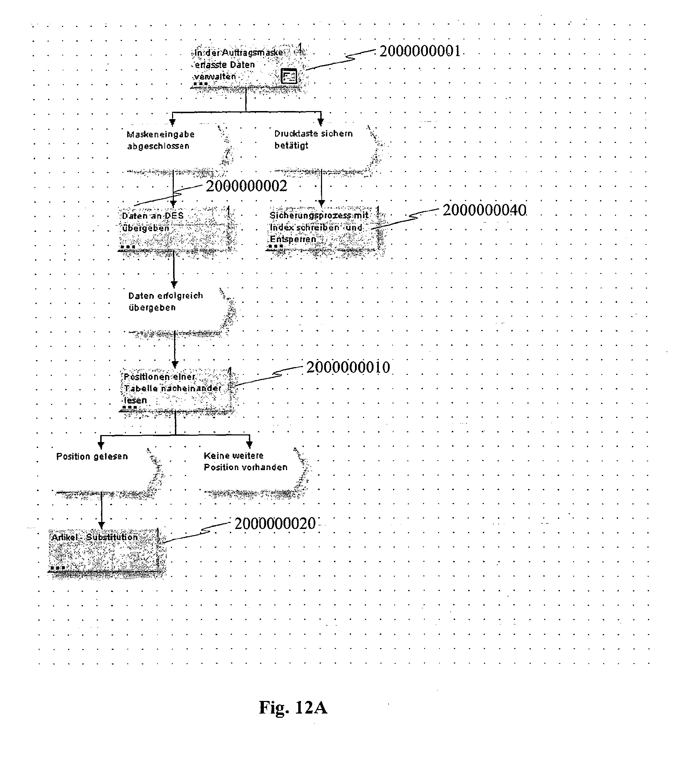

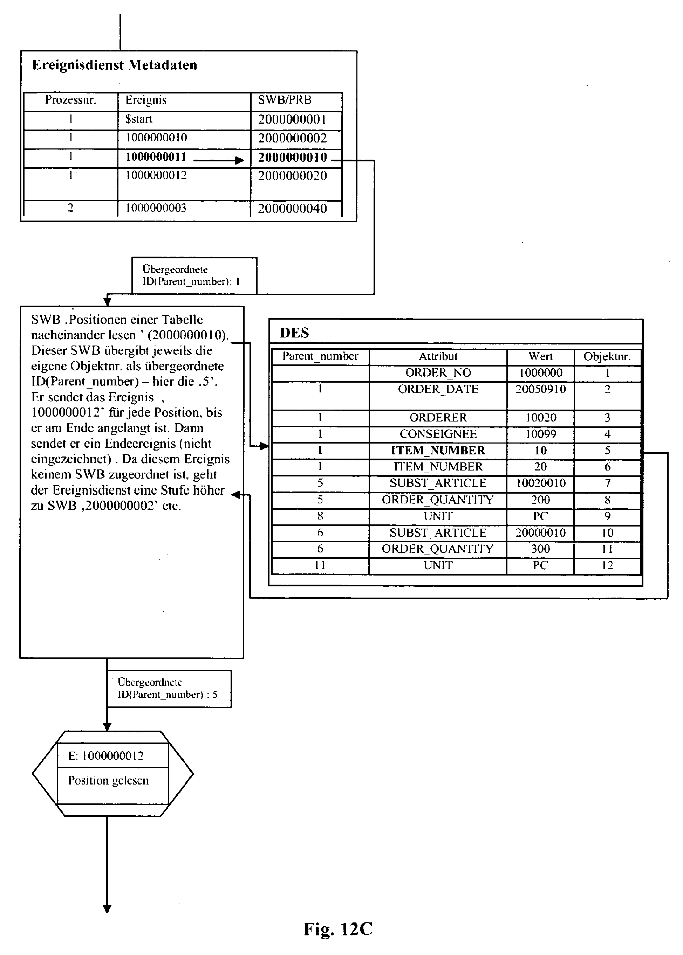

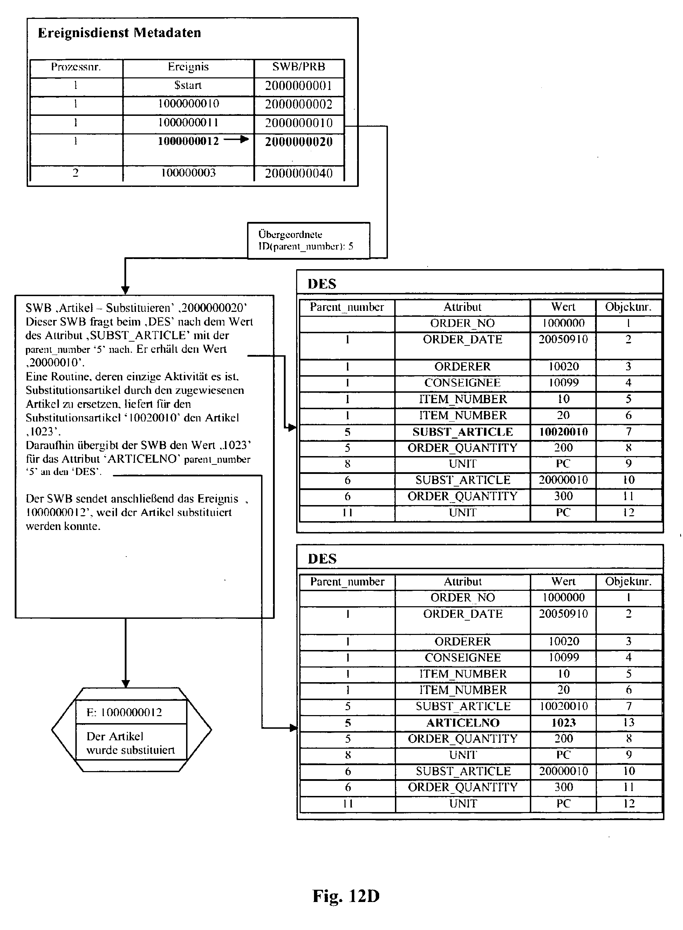

Unter Bezugnahme auf Fig. 12A bis Fig. 12D wird das erfindungsgemäße Verfahren anhand eines Programmablaufs zusammenfassend beschrieben. Der Programmablauf gemäß Fig. 12A zeigt wiederum einen Ausschnitt aus einer Auftragsdatenverwaltung, und zwar in Form einer graphischen Prozessmodellierung.

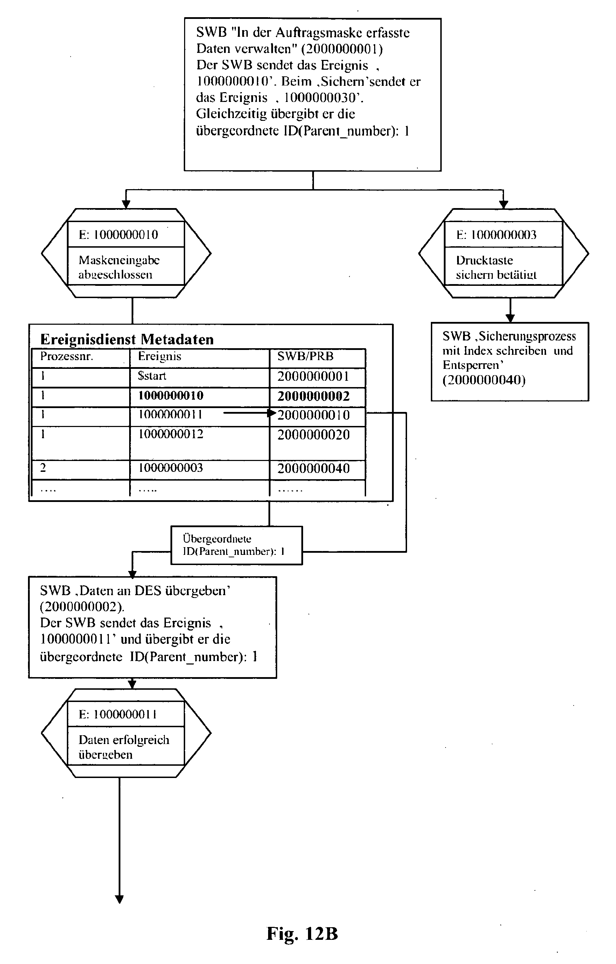

Fig. 12B zeigt das Zusammenwirken der einzelnen Softwarebausteine zur Laufzeit des Programms gemäß dem Prozessmodell der Fig. 12A. Die Tabelle "Ereignisdienst Metadaten" zeigt die aus dem Prozessmodell der Fig. 12A abgeleiteten Metadaten, die dem Ereignisdienst ED zur Auswertung zur Verfügung stehen. Die Tabelle bringt die Prozesse (erste Spalte), die möglichen Ereignisse (zweite Spalte) und die zur Laufzeit des Programms jeweils aufzurufenden Softwarebausteine/Prozessbausteine (SWB/PRB - dritte Spalte) zueinander in Beziehung. Im Programmablauf wird der Softwarebaustein "2000000001" mit der Aktivität "In der Auftragsmaske erfasste Daten verwalten" wegen seiner Beziehung zum Ereignis "$start" vom Ereignisdienst aufgerufen. Ist die Erfassung der Daten in der Auftragsmaske abgeschlossen, stellt der Softwarebaustein "2000000001" dem Ereignisdienst das Ereignis "1000000010" bereit. Mit der Bereitstellung des Ereignisses "1000000010" übergibt der Softwarebaustein die übergeordnete ID (Parent_Number) "1" an den Ereignisdienst. Das Ereignis "1000000010" steht dem Ereignisdienst damit zur Auswertung zur Verfügung. Der Ereignisdienst bestimmt auf der Basis des bereitgestellten Ereignisses aus den Metadaten der Tabelle "Ereignisdienst Metadaten" den nächsten Softwarebaustein. Dies ist der Softwarebaustein "2000000002" mit der Aktivität "Daten an DES übergeben". Der Softwarebaustein "2000000002" wird vom Ereignisdienst gestartet und erhält vom Ereignisdienst die übergeordnete ID (Parent_Number) 1. Dieser Softwarebaustein löst nach Vollendung seiner Aktivität (also die erfolgreiche Übergabe der Daten an den DES) das Ereignis "1000000011" aus und gibt dem Ereignisdienst diese Ereignis und die übergeordnete ID (Parent Number) "1" bekannt. Aufgrund des Ereignisses "1000000011" bestimmt der Ereignisdienst aus den Metadaten gemäß Tabelle "Ereignisdienst Metadaten" als nächsten Softwarebaustein im Programmablauf den Baustein "2000000010" zur Durchführung der Aktivität "Positionen einer Tabelle nacheinander lesen" und ruft diesen auf. Dieser Softwarebaustein liest die Positionen der Tabelle nacheinander und übergibt jeweils die Objektnummer der Positionsnummer (Attribut "ITEM_NUMBER") als übergeordnete ID - hier die Zahl "5", für den nachfolgenden Softwarebaustein an den Ereignisdienst. Der Softwarebaustein "2000000010" löst das Ereignis "1000000012" nach jeder gelesenen Position aus und übergibt dieses an den Ereignisdienst. Auf der Basis dieses Ereignisses ruft der Ereignisdienst den Softwarebaustein "2000000020" zur Durchführung der Aktivität "Artikel-Substituieren" auf. Dieser Softwarebaustein fordert den Wert des Substitutionsartikels (also die Artikelnummer, die ersetzt werden soll) vom DES an. Die Angabe der parent_number "5" in Kombination mit dem Attribut "SUBST_ARTICLE" genügt dem DES, den richtigen Wert zu finden. Eine dafür vorgesehene Routine gibt durch Auswertung einer Entscheidungstabelle bekannt, welcher Artikel den Substitutionsartikel ersetzen soll. Die Routine gibt in diesem Fall aufgrund der Entscheidungstabelle den Wert "1023" Softwarebaustein "2000000020" zurück. Der Softwarebaustein gibt anschließend der Wert "1023" mit dem Attribut "ARTICELNO" und der parent_number "5" an den DES. Der DES fügt eine neue Zeile

| | | | |
|---|---|---|---|
| 5 | ARTICELNO | 1023 | 13 |

in sein "Datengedächtnis" ein. Das Attribute-Werte-Paar "Articelno/1023" erhält eine neue Objektnummer 13.

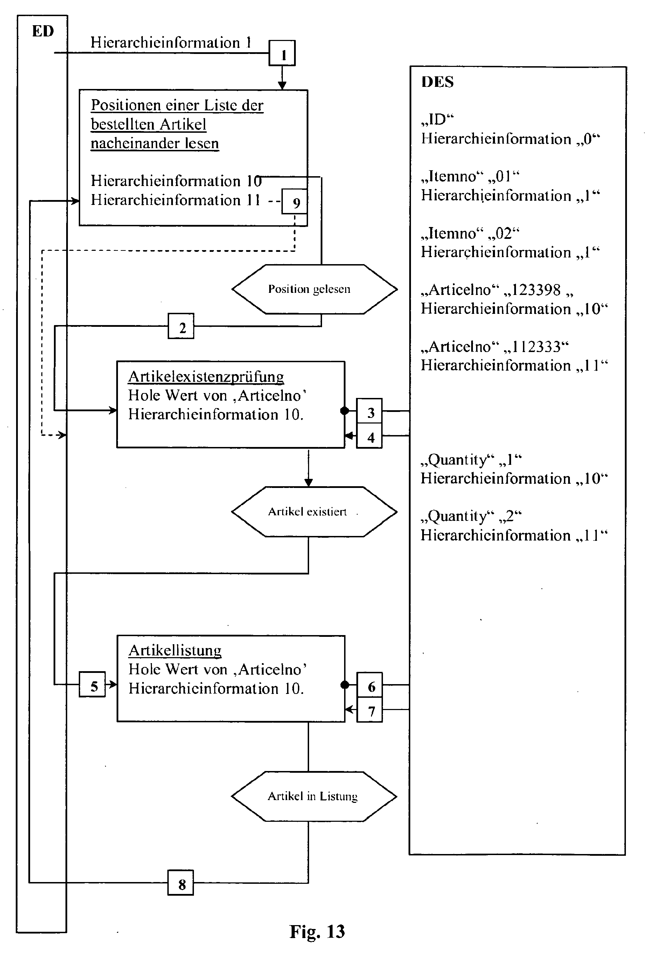

Fig. 13 zeigt den Programmablauf und die Informationsflüsse in einem Programmausschnitt, welches die zuvor beschriebenen erfindungsgemäßen Softwarebausteine enthält.

Der Ereignisdienst ED ruft (1) den Softwarebaustein SWB auf, der die Position der bestellten Artikel nacheinander liest. Gleichzeitig erhält dieser SWB eine Hierarchieinformation (die allerdings für diesen speziellen SWB keine Rolle spielt). Der SWB gibt für jede Artikelposition die der Position zugewiesene Hierarchieinformation und das Ereignis 'Position gelesen' an den ED zurück. Dieser übergibt diese Hierarchieinformation beim Aufruf des nachfolgenden SWB "Artikelexistenzprüfung". Den SWB "Artikelexistenzprüfung" bestimmt der ED über das genannte Ereignis. Der SWB "Artikelexistenzprüfung" kann mit der Hierarchieinformation und dem Attribut des Artikelwertes (hier Articelno) den richtigen Wert vom DES erhalten (3 und 4) - hier den Wert "123398". Danach kann eine Meldung an den Benutzer erfolgen, dass der Artikel nicht existiert (in der Fig. nicht eingezeichnet). Sodann ruft (5) der Ereignisdienst ED auf dem Ereignis "Artikel existiert" basierend den Softwarebaustein SWB "Artikellistung" auf. Dieser holt (6 und 7) erneut den Wert für die Artikelnummer vom DES. Der SWB prüft, ob der aktuelle Artikel in der Artikelliste vorgesehen ist, die für bestimmte Kunden oder Kundengruppen definiert wurde. Auch dieser SWB verwendet das gleiche Attribut, weil es sich um einen semantisch gleichen Wert handelt. Nur dadurch kann gewährleistet werden, dass ein beliebiger SWB die richtige Werte erhält oder Werte korrekt an den DES abgibt. Auch dieser SWB arbeitet mit der Hierarchieinformation, die der SWB "Artikelexistenzprüfung" verwendet.

Danach wird mit Schritt (8) die nächste Hierarchieinformation aus dem SWB "Positionen einer Liste der bestellten Artikel nacheinander lesen" an den ED übergeben, da das Ereignis "Artikel in Listung" mit keinem weiteren SWB verbunden ist. Der weitere Verlauf (9) ist durch die gestrichelte Linie angedeutet. Der SWB "Artikelexistenzprüfung" wird mit der Hierarchieinformation "11" und dem Attribut des Artikelwertes (hier Articelno) auf Anfrage an den DES den Wert '112333' erhalten.

Wie die Figur deutlich zeigt, verlaufen alle Datenflüsse zwischen den SWB und dem DES. Kein SWB gibt Datenwerte, die für einen im Programmablauf nachfolgenden SWB bestimmt sind, direkt an diesen ab. Dagegen werden Hierarchieinformationen von einem SWB zum anderen übergeben, wie die Pfeile links im Diagramm verdeutlichen. Semantisch gleiche Daten sind demselben Attribut zugeordnet.

Der Ereignisdienst bestimmt jeweils den nächsten SWB auf der Basis von Ereignissen und definiert somit den Programmablauf.

## Patentansprüche

1. Verfahren zum Austausch von Daten zwischen einer Anzahl von Softwarebausteinen, die in einem Computerprogramm zusammenwirken, um einen Prozess abzuarbeiten,
wobei jeder der Softwarebausteine in dem Computerprogramm ablauffähig ist; wobei
jeder Softwarebaustein die Daten, die von einem anderen Softwarebaustein bereitzustellen sind, von einem vorbestimmten Softwarebaustein (DES) bezieht und
jeder Softwarebaustein die Daten, die von ihm für andere Softwarebausteine bereitzustellen sind, an den vorbestimmten Softwarebaustein (DES) abgibt und
das Bereitstellen und das Beziehen der Daten gemäß einem vorbestimmten Standard erfolgen,
wobei gemäß dem vorbestimmten Standard
die Daten Datenwerte und Attribute umfassen,
**dadurch gekennzeichnet,**
**dass**
die Datenwerte jeweils Attributen zugeordnet werden, wobei semantisch gleiche Datenwerte demselben Attribut zugeordnet werden und durch eine jeweilige Hierarchieinformation voneinander unterscheidbar gemacht werden,
**dass** ein Softwarebaustein, der Daten an den vorbestimmten Softwarebaustein (DES) abgibt oder von dem vorbestimmten Softwarebaustein (DES) bezieht, die jeweilige Hierarchieinformation von einem anderen Softwarebaustein erhält, und
**dass** das Beziehen und das Bereitstellen von Daten durch einen Softwarebaustein die Übergabe der jeweiligen Hierarchieinformation umfasst.

2. Verfahren nach Anspruch 1, wobei die Attribute-Datenwerte-Zuordnungen eine eindeutige ID erhalten und zu hierarchisch organisierten Datenobjekten verknüpft werden, wobei jedes Datenobjekt an oberster Hierarchieebene eine ID aufweist, welche das Datenobjekt eindeutig identifizierbar macht.

3. Verfahren nach Anspruch 2, wobei ein Softwarebaustein, der Daten von dem vorbestimmten Softwarebaustein (DES) anfordert, die eindeutige hierarchische Beziehung der angeforderten Daten von einem anderen Softwarebaustein erhält.

4. Verfahren nach Anspruch 3, wobei die eindeutige hierarchische Beziehung durch Anfordern der ID des den angeforderten Daten übergeordneten Datenobjekts erhalten wird.

5. Verfahren nach Anspruch 2, wobei ein Softwarebaustein, der Daten an den vorbestimmten Softwarebaustein (DES) abgibt, die eindeutige hierarchische Beziehung der abzugebenden Daten von einem anderen Softwarebaustein erhält.

6. Verfahren nach Anspruch 5, wobei die eindeutige hierarchische Beziehung durch Anfordern der ID des den abgegebenen Daten übergeordneten Datenobjekts erhalten wird.

7. Verfahren nach Anspruch 2, wobei beim Anfordern oder Übergeben von Daten die eindeutige hierarchische Beziehung der angeforderten Daten an den vorbestimmten Softwarebaustein (DES) bekannt gegeben wird.

8. Verfahren nach einem der vorhergehenden Ansprüche, wobei jeder Daten verarbeitende Softwarebaustein nach seiner Ausführung ein Ereignis ausgibt, welches bezeichnend für ein Ergebnis seiner Ausführung ist.

9. Verfahren gemäß Anspruch 8, wobei das Ereignis von einem vorbestimmten Softwarebaustein (ED) während des Prozesses ausgewertet wird.

10. Verfahren nach einem der vorhergehenden Ansprüche, wobei mit der Abgabe von Daten an den vorbestimmten Softwarebaustein (DES) das Halten der Daten bis zur Speicherung der Daten in einer Datenbank veranlasst wird.

11. Verfahren gemäß einem der vorherigen Ansprüche, wobei jeder Daten verarbeitende Softwarebaustein höchstens zwei verschiedene Ereignisse ausgibt.

12. Verfahren gemäß einem der vorherigen Ansprüche, wobei jeder Daten verarbeitende Softwarebaustein höchstens eine Aktivität erledigt, wobei die Gesamtheit der Aktivitäten den Prozess repräsentiert.

13. Verfahren gemäß einem der vorherigen Ansprüche, wobei die Attribut-Datenwerte-Paare zusammen mit der hierarchischen Beziehung in einer Datenbank gespeichert werden.

14. Verfahren zur Steuerung einer Anzahl von Softwarebausteinen, die in einem Computerprogramm zusammenwirken, um einen Prozess abzuarbeiten, wobei der Prozess gemäß einer Modellierung durch eine Anzahl von Aktivitäten gebildet wird,
jeder der Softwarebausteine in dem Computerprogramm ablauffähig ist,
jede Aktivität einem Softwarebaustein zur Abarbeitung zugewiesen wird und jeder Softwarebaustein höchstens eine Aktivität zur Abarbeitung zugewiesen erhält,
wobei jeder eine Aktivität abarbeitende Softwarebaustein nach Abarbeiten der Aktivität ein Ereignis bereitstellt, welches bezeichnend für ein Ergebnis des Abarbeitens ist,
wobei auf der Basis eines jeweils bereitgestellten Ereignisses jeweils ein weiterer Softwarebaustein aufgerufen wird,
wobei der Zusammenhang zwischen Ereignis und aufzurufendem Softwarebaustein durch die Modellierung des Prozesses definiert ist,
wobei das Ergebnis des Abarbeitens einer Aktivität bezeichnend für den Erfolg des Abarbeitens der Aktivität ist,
wobei das ausgelöste Ereignis ein Ergebnis des prozessierten Softwarewarebausteins zur Verfügung stellt, und
wobei das Ergebnis des Softwarebausteins einem vorbestimmten Softwarebaustein (DES) mittels des Verfahrens nach Anspruch 1 bereitgestellt wird.

15. Softwarebaustein, der geeignet ist, in einem Computerprogramm mit weiteren Softwarebausteinen zusammenzuwirken, um einen Prozess abzuarbeiten,
wobei jeder der Softwarebausteine in dem Computerprogramm ablauffähig ist, wobei
der Softwarebaustein die Daten, die von einem anderen Softwarebaustein bereitzustellen sind, von einem vorbestimmten Softwarebaustein (DES) bezieht und
der Softwarebaustein die Daten, die von ihm für andere Softwarebausteine bereitzustellen sind, an den vorbestimmten Softwarebaustein (DES) abgibt
und
das Bereitstellen und das Beziehen der Daten gemäß einem vorbestimmten Standard erfolgen,
wobei gemäß dem vorbestimmten Standard
die Daten Datenwerte und Attribute umfassen, **dadurch gekennzeichnet,**
**dass** die Datenwerte jeweils Attributen zugeordnet werden, wobei semantisch gleiche Datenwerte demselben Attribut zugeordnet werden und durch eine jeweilige Hierarchieinformation voneinander unterscheidbar gemacht werden,
**dass** einzelne Attribute durch hierarchische Beziehungen in semantischen Zusammenhang zueinander gebracht werden, und
**dass** das Beziehen von Daten durch den Softwarebaustein die Übernahme der jeweiligen Hierarchieinformation umfasst und das Bereitstellen von Daten durch den Softwarebaustein die Übergabe der jeweiligen Hierarchieinformation umfasst.

16. Computerprogramm, aufweisend eine Anzahl von Softwarebausteinen gemäß Anspruch 15, die zusammenwirken, um einen Prozess abzuarbeiten, wobei der Prozess in eine Anzahl von Aktivitäten zerlegbar ist, wobei die Softwarebausteine Daten austauschen gemäß einem Verfahren nach einem der Ansprüche 1 bis 13.

17. Computerprogramm nach Anspruch 16, wobei zumindest einer der Softwarebausteine ein Prozessbaustein ist.

18. Computerprogramm nach Anspruch 17, wobei ein Prozessbaustein zumindest einen weiteren Softwarebaustein und/oder Prozessbaustein umfasst.

## Claims

1. A method of exchanging data between a plurality of software components which interact in a computer program for executing a process,
whereby each of the software components in the computer program is executable;
whereby
each software component acquires the data which is to be provided by another software component, from a predetermined software component (DES), and
each software component delivers the data which is to be provided by it to software components, to the predetermined software component (DES), and whereby
providing and acquiring of the data is performed according to a predetermined standard,
whereby according to the predetermined standard
the data comprises data values and attributes,
**characterized in that**
the data values are assigned to respective attributes, whereby semantically identical data values are assigned to the same attribute and are made distinguishable from each other by a respective hierarchical information;
that a software component which delivers data to the predetermined software component (DES) or which acquires data from the predetermined software component (DES), receives the respective hierarchical information from another software component, and
that acquiring and providing data by a software component comprises transferring the respective hierarchical information.

2. The method according to claim 1, whereby the attribute data value assignments obtain a unique ID and are linked to hierarchically organized data objects, whereby each data object comprises at the uppermost hierarchical position an ID which renders the data object uniquely identifiable.

3. The method according to claim 2, whereby a software component which requests data from the predetermined software component (DES), obtains the unique hierarchical relation of the requested data from another software component.

4. The method according to claim 3, whereby the unique hierarchical relation is obtained by requesting the ID of the data object which is superordinated to the requested data.

5. The method according to claim 2, whereby a software component which delivers data to the predetermined software component (DES), obtains the unique hierarchical relation of the data to be delivered from another software component.

6. The method according to claim 5, whereby the unique hierarchical relation is obtained by requesting the ID of the data object which is superordinated to the delivered data.

7. The method according to claim 2, whereby upon requesting or delivering of data the unique hierarchical relation of the requested data is notified to the predetermined software component (DES).

8. The method according to one of the preceding claims, whereby each data processing software component outputs after its processing an event which is indicative of a result of its processing.

9. The method according to claim 8, whereby the event is processed by a predetermined software component (ED) during the process.

10. The method according to one of the preceding claims, whereby upon delivery of data to the predetermined software component (DES), the keeping of the data until storing the data in a database is initiated.

11. The method according to one of the preceding claims, whereby each data processing software component outputs at most two different events.

12. The method according to one of the preceding claims, whereby each data processing software component performs at most one activity, whereby all the activities together represent the process.

13. The method according to one of the preceding claims, whereby the attribute data value-pairs are stored together with the hierarchical relation in a data base.

14. Method of controlling a plurality of software components which interact in a computer program for executing a process, whereby the process is formed, according to a modeling, by a number of activities,
each of the software components is executable in the computer program;
each activity is assigned to a software component for being executed, and each software component gets at most one activity for executing,
whereby each software component executing an activity provides after execution of the activity an event which is indicative of a result of the execution,
whereby on the basis of the respective provided result, a respective further software component is called,
whereby the relation between an event and a software component which is to be called is defined by the modeling of the process,
whereby the result of the execution of an activity is indicative of the success of the execution of the activity,
whereby the triggered event provides a result of the processed software component and
whereby the result of the software component is provided to a predetermined software component (DES) by the method of claim 1.

15. Software component which is capable to interact in a computer program with a further software component for executing a process,
whereby each of the software components in the computer program is executable,
whereby the software component acquires the data which is to be provided by another software component, from a predetermined software component (DES), and
the software component delivers the data which is to be provided by it to other software components, to the predetermined software component (DES), and
providing and acquiring of all the data is performed according to a predetermined standard,
whereby according to the predetermined standard
the data comprises data values and attributes, **characterized in that** the data values are assigned to respective attributes, whereby semantically identical data values are assigned to the same attribute and are made distinguishable by respective hierarchical information,
that single attributes are related to each other semantically by hierarchical relations, and
whereby acquiring data by the software component comprises acquisition of the hierarchical information, and providing data values by the software component comprises transferring respective hierarchical information.

16. Computer program, comprising a plurality of software components according to claim 15 which interact for executing a process whereby the process is decomposable into a plurality of activities, whereby the software components exchange data according to a method of one of claims 1 to 13.

17. The computer program according to claim 16, whereby at least one of the software components is a process component.

18. The computer program according to claim 17, whereby a process component comprises at least one further software component and/or process component.

## Revendications

1. Procédé d'échange de données entre un nombre de composants logiciels qui interagissent entre eux dans un programme informatique afin d'exécuter un processus,
dans lequel chacun desdits composants logiciels est exécutable dans le programme informatique,
dans lequel
chaque composant logiciel acquiert d'un composant logiciel prédéterminé (DES) les données qui sont à mettre à la disposition par un autre composant logiciel et
chaque composant logiciel fournit les données qu'il doit mettre à la disposition d'autres composants logiciels, audit composant logiciel prédéterminé (DES), et
la mise à disposition et l'acquisition des données se font selon un standard prédéterminé,
selon ledit standard prédéterminé, les données comprenant des valeurs de données et des attributs,
**caractérisé en ce que**
les valeurs de données sont associées chacune à des attributs, des valeurs de données sémantiquement identiques étant associées au même attribut et étant rendues distinguables les unes des autres par une information hiérarchique respective,
qu'un composant logiciel qui fournit des données audit composant logiciel prédéterminé (DES) ou acquiert des données dudit composant logiciel prédéterminé (DES), reçoit l'information hiérarchique respective d'un autre composant logiciel, et
que l'acquisition et la mise à disposition de données par un composant logiciel comprend le transfert de ladite information hiérarchique respective.

2. Procédé selon la revendication 1, dans lequel les associations attributs/valeurs de données se voient attribuer un numéro d'identification unique et sont unies en objets de données organisés de façon hiérarchique, chacun des objets de données présentant au plus haut niveau de l'hiérarchie un numéro d'identification qui rend l'objet de données identifiable de façon unique.

3. Procédé selon la revendication 2, dans lequel un composant logiciel qui demande des données audit composant logiciel prédéterminé (DES) reçoit d'un autre composant logiciel la relation hiérarchique unique des données demandées.

4. Procédé selon la revendication 3, dans lequel la relation hiérarchique unique est obtenue en demandant le numéro d'identification de l'objet de données supérieur aux données demandées.

5. Procédé selon la revendication 2, dans lequel un composant logiciel qui fournit des données au composant logiciel prédéterminé (DES) reçoit d'un autre composant logiciel la relation hiérarchique unique des données à fournir.

6. Procédé selon la revendication 5, dans lequel la relation hiérarchique unique est obtenue en demandant le numéro d'identification de l'objet de données supérieur aux données fournies.

7. Procédé selon la revendication 2, dans lequel, lorsque des données sont demandées ou transmises, la relation hiérarchique unique des données demandées est communiquée au composant logiciel prédéterminée (DES).

8. Procédé selon l'une quelconque des revendications précédentes, dans lequel chaque composant logiciel qui traite des données fournit, après son exécution, un évènement qui est significatif d'un résultat de son exécution.

9. Procédé selon la revendication 8, dans lequel l'évènement d'un composant logiciel prédéterminé (ED) est évalué durant le processus.

10. Procédé selon l'une quelconque des revendications précédentes, dans lequel, au moment où des données sont fournies au composant logiciel prédéterminé (DES), on donne lieu au maintien des données jusqu'au stockage des données dans une banque de données.

11. Procédé selon l'une quelconque des revendications précédentes, dans lequel chaque composant logiciel qui traite des données fournit tout au plus deux évènements différents.

12. Procédé selon l'une quelconque des revendications précédentes, dans lequel chaque composant logiciel qui traite des données accomplit tout au plus une activité, l'ensemble des activités représentant le processus.

13. Procédé selon l'une quelconque des revendications précédentes, dans lequel les couples attributs/valeurs de données sont stockés conjointement avec la relation hiérarchique dans une banque de données.

14. Procédé de commande d'un nombre de composants logiciels qui interagissent entre eux dans un programme informatique afin d'exécuter un processus, ledit processus étant formé conformément à une modélisation par un nombre d'activités,
dans lequel
chacun desdits composants logiciels est exécutable dans le programme informatique,
chaque activité est assignée à un composant logiciel pour être exécutée et chaque composant logiciel se voit assigner tout au plus une activité à exécuter,
chaque composant logiciel qui exécute une activité fournit, après avoir exécuté ladite activité, un évènement qui est significatif d'un résultat de l'exécution,
dans lequel, sur la base d'un évènement respectivement fourni, respectivement un autre composant logiciel est appelé,
dans lequel la liaison entre l'évènement et le composant logiciel à appeler est définie par la modélisation du processus,
dans lequel le résultat de l'exécution d'une activité est significatif du succès de l'exécution de ladite activité,
dans lequel l'évènement déclenché met à la disposition un résultat du composant logiciel exécuté et
dans lequel le résultat du composant logiciel est mis à la disposition d'un composant logiciel prédéterminé (DES) au moyen du procédé selon la revendication 1.

15. Composant logiciel qui est apte à interagir avec d'autres composants logiciels dans un programme informatique afin d'exécuter un processus,
dans lequel chacun desdits composants logiciels est exécutable dans le programme informatique,
dans lequel
ledit composant logiciel acquiert d'un composant logiciel prédéterminé (DES) les données qui sont à mettre à la disposition par un autre composant logiciel et
ledit composant logiciel fournit les données qu'il doit mettre à la disposition d'autres composants logiciels, audit composant logiciel prédéterminé (DES), et
la mise à disposition et l'acquisition des données se font selon un standard prédéterminé,
selon ledit standard prédéterminé, les données comprenant des valeurs de données et des attributs,
**caractérisé en ce que**
les valeurs de données sont associées chacune à des attributs, des valeurs de données sémantiquement identiques étant associées au même attribut et étant rendues distinguables les unes des autres par une information hiérarchique respective, que des attributs individuels sont mis en liaison sémantique les uns par rapport aux autres par des relations hiérarchiques, et
que l'acquisition de données par ledit composant logiciel comprend la reprise de l'information hiérarchique respective et que la mise à disposition de données par ledit composant logiciel comprend le transfert de ladite information hiérarchique respective.

16. Programme informatique, comprenant un nombre de composants logiciels selon la revendication 15, qui interagissent entre eux pour exécuter un processus, ledit processus pouvant être divisé en un nombre d'activités, les composants logiciels échangeant des données selon un procédé suivant l'une quelconque des revendications 1 à 13.

17. Programme informatique selon la revendication 16, dans lequel l'un au moins des composants logiciels est un composant de processus.

18. Programme informatique selon la revendication 17, dans lequel un composant de processus comprend au moins un autre composant logiciel et/ou composant de processus.
